# EUROPEAN PATENT APPLICATION

(11) **EP 4 836 110 A1**
(43) Date of publication of application: **04.11.2026**
(21) Application number: 24909950.8
(22) Date of filing: 03.09.2024
(51) Int. Cl.: H01M 50/152, H01M 50/536

(54) **COVER PLATE, COVER PLATE ASSEMBLY, BATTERY CELL, BATTERY, BATTERY ASSEMBLY AND ELECTRICAL DEVICE**

(30) Priority: 29.12.2023 CN 202323669079 U
(71) Applicant: BYD Company Limited, Shenzhen, Guangdong 518118 (CN)
(72) Inventor: LIU, Yanchu, Shenzhen, Guangdong 518118 (CN); CHEN, Jiankang, Shenzhen, Guangdong 518118 (CN); ZHOU, Guishu, Shenzhen, Guangdong 518118 (CN); MA, Zhiying, Shenzhen, Guangdong 518118 (CN); WANG, Yadong, Shenzhen, Guangdong 518118 (CN)
(74) Representative: Mathys & Squire
(86) International application number: PCT/CN2024/116542
(87) International publication number: WO 2025/139004

(57) **Abstract**

An electrical device is provided. The electrical device includes a battery assembly. The battery assembly includes a battery. The battery includes a battery cell. The battery cell includes a cover plate assembly. The cover plate assembly includes a cover plate. The cover plate includes a cover plate body, a terminal-pole, and a first current collector plate. The terminal-pole is disposed on the cover plate body, and the terminal-pole is connected to and insulated from the cover plate body. The first current collector plate is connected to the terminal-pole, the first current collector plate includes a body portion, the body portion is configured to be connected to a tab, the body portion is exposed from the cover plate body in a thickness direction of the first current collector plate, a shortest distance between the body portion and a center of the terminal-pole is d₀, and d₀ meets 2 mm ≤ d₀ ≤ 8 mm.

## Description

### CROSS REFERENCE TO RELATED APPLICATIONS

This application claims priority to Chinese Patent Application No. 202323669079.0, filed with the China National Intellectual Property Administration on December 29, 2023 and entitled "COVER PLATE, COVER PLATE ASSEMBLY, BATTERY CELL, BATTERY, BATTERY ASSEMBLY, AND ELECTRICAL DEVICE", which is incorporated herein by reference in its entirety.

### TECHNICAL FIELD

This application relates to the field of electrical device technologies, and in particular, to a cover plate, a cover plate assembly, a battery cell, a battery, a battery assembly, and an electrical device.

### BACKGROUND

As a core component of a power battery, a battery cell plays an important role in the power battery. In the power battery, the battery cell determines quality of a power battery product, and certainly also affects battery life and capacity of an electrical device.

In related technologies, a battery cell includes a cover plate. The cover plate has a large quantity of components and a low integration level, and this reduces use performance of the cover plate. During assembly of the battery cell, assembly steps are cumbersome, and operations are complex. Consequently, assembly efficiency of the battery cell is reduced. Moreover, such battery cells have low current-carrying capability and high impedance.

### SUMMARY

This application is intended to resolve at least one of the technical problems in conventional technologies. Therefore, an objective of this application is to provide a cover plate. An integration level of the cover plate is relatively high, and when the cover plate is used for a battery cell, current-carrying capability of the battery cell is improved, impedance is reduced, and installation efficiency of the battery cell is also improved.

A second objective of this application is to provide a cover plate assembly that uses the cover plate.

A third objective of this application is to provide a battery cell that uses the cover plate assembly.

A fourth objective of this application is to provide a battery that uses the battery cell.

A fifth objective of this application is to provide a battery assembly that uses the battery.

A sixth objective of this application is to provide an electrical device that uses the battery assembly.

A cover plate according to an embodiment of a first aspect of this application includes: a cover plate body; a terminal-pole, wherein the terminal-pole is disposed on the cover plate body, the first current collector plate includes a body portion, the body portion is adapted to be connected to a tab, and the terminal-pole is connected to and insulated from the cover plate body; and a first current collector plate, wherein the first current collector plate is connected to the terminal-pole, the body portion is exposed from the cover plate body in a thickness direction of the first current collector plate, and a shortest distance between the body portion and a center of the terminal-pole is d₀, and d₀ meets 2 mm ≤ d₀ ≤ 8 mm.

According to the cover plate of this application, the shortest distance d₀ between the body portion and the center of the terminal-pole is set to meet 2 mm ≤ d₀ ≤ 8 mm. This facilitates a connection of the first current collector plate to a first tab and the terminal-pole, and may also reduce impedance and improve current-carrying capability. In addition, the terminal-pole is connected to and insulated from the cover plate body, so that current on the terminal-pole can be prevented from flowing to the cover plate body, to avoid a short circuit, thereby facilitating current-carrier passage through the terminal-pole. Furthermore, this also facilitates installation of the terminal-pole. When the cover plate is used for a battery cell, this facilitates long-term normal use of the battery cell.

According to the cover plate of this application, d₀ further meets 4 mm ≤ d₀ ≤ 8 mm.

According to the cover plate of this application, the terminal-pole extends through the cover plate body, a first insulating partition member and a sealing member are disposed between an outer peripheral surface of the terminal-pole and the cover plate body, the sealing member is sleeved on the terminal-pole, and the first insulating partition member is disposed on outer peripheral sides of the sealing member and the terminal-pole.

According to the cover plate of this application, the cover plate further includes: a connection member, wherein the connection member is connected to an end of the terminal-pole that is away from the first current collector plate in the thickness direction of the first current collector plate; and a second insulating partition member, wherein the second insulating partition member is disposed between the connection member and the cover plate body.

According to the cover plate of this application, a second insulating partition member recess is formed on the second insulating partition member, the connection member is fitted in the second insulating partition member recess, and the connection member is insulated from the cover plate body by using the second insulating partition member.

According to the cover plate of this application, the terminal-pole includes a first terminal-pole segment and a second terminal-pole segment that are connected to each other, the first terminal-pole segment passes through the cover plate body and the second insulating partition member to be connected to the connection member, the second terminal-pole segment is located on a side of the cover plate body that faces the first current collector plate, and the second terminal-pole segment is connected to the first current collector plate.

According to some embodiments of this application, a cover plate through-hole is formed on the cover plate body, the first terminal-pole segment passes through the cover plate through-hole, at least a part of the sealing member is disposed between an outer peripheral surface of the first terminal-pole segment and an inner peripheral wall of the cover plate through-hole, and the first insulating partition member is disposed on outer peripheral sides of the sealing member and the second terminal-pole segment.

According to some embodiments of this application, the sealing member includes: a first sealing segment, wherein the first sealing segment is disposed between an outer peripheral surface of the terminal-pole and the inner peripheral wall of the cover plate through-hole; and a second sealing segment, wherein the second sealing segment is connected to an end of the first sealing segment that is adjacent to the first current collector plate, and the second sealing segment is located between the first insulating partition member and the first terminal-pole segment.

According to some embodiments of this application, an anti-rotation groove is formed on a side surface of the first insulating partition member that is adjacent to the first current collector plate, and the second terminal-pole segment is fitted in the anti-rotation groove; and the first current collector plate is provided with an extension portion, at least a part of an outer peripheral edge of the extension portion is fitted in the anti-rotation groove, and the extension portion is connected to a side of the second terminal-pole segment that is away from the cover plate body.

According to some embodiments of this application, the at least a part of the outer peripheral edge of the extension portion matches a shape of an inner peripheral wall of the anti-rotation groove.

According to some embodiments of this application, an anti-rotation protrusion is disposed on the side surface of the first insulating partition member that is adjacent to the first current collector plate, the anti-rotation protrusion and the side surface of the first insulating partition member that is adjacent to the first current collector plate jointly define the anti-rotation groove, and a side of the anti-rotation groove that is adjacent to a center of the first current collector plate is open.

According to some embodiments of this application, a thickness of the first insulating partition member is d₁, and d₁ meets 0.5 mm ≤ d₁ ≤ 2.0 mm.

According to some embodiments of this application, the first insulating partition member is an injection molded part.

According to some embodiments of this application, a cover plate protrusion is disposed on a side surface of the cover plate body that is adjacent to the first insulating partition member in a thickness direction of the cover plate body; and a first insulating partition member recess is formed on a side surface of the first insulating partition member that is adjacent to the cover plate body in the thickness direction of the cover plate body, a first insulating partition member through-hole is formed on a bottom wall of the first insulating partition member recess, the first terminal-pole segment passes through the first insulating partition member through-hole, and the cover plate protrusion is fitted in the first insulating partition member recess.

According to some embodiments of this application, the cover plate protrusion is formed by a part of a side surface of the cover plate body that is away from the first current collector plate in the thickness direction of the cover plate body, protruding toward a side surface of the first current collector plate.

According to some embodiments of this application, the cover plate protrusion forms a cover plate recess on the side surface of the cover plate body that is away from the first current collector plate in the thickness direction of the cover plate body, and at least a part of the second insulating partition member is fitted in the cover plate recess.

According to some embodiments of this application, the connection member is polygonal or oblong.

According to some embodiments of this application, a width of the connection member is w, a diameter of the terminal-pole is d₂, and w and d₂ meet 3.5 mm ≤ w - d₂ ≤ 6 mm.

According to some embodiments of this application, the connection member is an aluminum stamped part.

According to some embodiments of this application, the cover plate body is a steel stamped part.

According to some embodiments of this application, a connection protrusion protruding away from the cover plate body in the thickness direction of the first current collector plate is disposed on the first current collector plate.

According to some embodiments of this application, the connection protrusion includes a first protrusion portion and a second protrusion portion, one end of the first protrusion portion is connected to one end of the second protrusion portion, the other end of the first protrusion portion and the other end of the second protrusion portion extend in a direction in which the two ends are away from each other, an included angle between the first protrusion portion and the second protrusion portion is β, and β meets 20° ≤ β ≤ 80°.

According to some embodiments of this application, the connection protrusion is formed by a part of a side surface of the first current collector plate that is adjacent to the terminal-pole in the thickness direction of the first current collector plate, protruding toward a side surface away from the terminal-pole; and the connection protrusion forms a recess on the side surface of the first current collector plate that is adjacent to the terminal-pole in the thickness direction of the first current collector plate, so that the connection protrusion is formed on the side surface away from the terminal-pole.

A cover plate assembly according to an embodiment of a second aspect of this application includes: a cover plate, wherein the cover plate is the cover plate according to the embodiment of the first aspect of this application; and a second current collector plate, wherein the second current collector plate is connected to the cover plate body of the cover plate, the second current collector plate is insulated from the terminal-pole and the first current collector plate of the cover plate, and the second current collector plate and the first current collector plate are respectively connected to tabs with opposite polarities.

According to some embodiments of this application, the cover plate assembly further includes a substrate. The substrate is connected to a side of the cover plate that is away from the second current collector plate in a thickness direction of the cover plate, an opening is formed on the substrate, and the terminal-pole is exposed from the opening.

According to some embodiments of this application, an outer peripheral edge of the cover plate has a step portion, an edge of the opening has a fitting portion extending toward a center of the opening, and the fitting portion is fitted on the step portion.

According to some embodiments of this application, on a side on which the second current collector plate is located, a shortest distance between the edge of the opening and an outer peripheral edge of the substrate is d₄, and d₄ meets 1.5 mm ≤ d₄ ≤ 4 mm.

According to some embodiments of this application, the cover plate assembly further includes a first insulating member, and the first insulating member is disposed between the substrate and the first current collector plate.

According to some embodiments of this application, a thickness of the first insulating member is h₁, and h₁ meets 20 µm ≤ h₁ ≤ 200 µm.

A battery cell according to an embodiment of a third aspect of this application includes: an electrode core, wherein a first tab and a second tab are disposed at an end of the electrode core, and the first tab and the second tab have opposite polarities; and a cover plate assembly, wherein the cover plate assembly is the cover plate assembly according to the embodiment of the second aspect of this application, the cover plate assembly being disposed at the end of the electrode core, the first current collector plate of the cover plate assembly being connected to the first tab, and the second current collector plate of the cover plate assembly being connected to the second tab.

According to some embodiments of this application, the battery cell further includes a second insulating member, and the second insulating member is disposed between the first tab and the second tab.

According to some embodiments of this application, a thickness of the second insulating member is h₂, and h₂ meets 20 µm ≤ h₂ ≤ 200 µm.

According to some embodiments of this application, the terminal-pole of the cover plate assembly is opposite to a center of the end of the electrode core.

A battery according to an embodiment of a fourth aspect of this application includes the battery cell according to the embodiment of the third aspect of this application.

According to some embodiments of this application, a side edge of the cover plate body of the cover plate of the cover plate assembly of the battery cell is formed as an arc adapted to an outer peripheral contour of the battery cell.

A battery assembly according to an embodiment of a fifth aspect of this application includes the battery according to the embodiment of the fourth aspect of this application.

An electrical device according to an embodiment of a sixth aspect of this application includes the battery assembly according to the embodiment of the fifth aspect of this application.

Some of additional aspects and advantages of this application are provided in the following descriptions, and some of the additional aspects and advantages become clear from the following descriptions or are learned from practice of this application.

### BRIEF DESCRIPTION OF DRAWINGS

The foregoing and/or additional aspects and advantages of this application are clear and easily understood from the descriptions of the embodiments provided with reference to the following accompanying drawings.
FIG. 1 is a schematic diagram of a cover plate according to an embodiment of this application;
FIG. 2 is an exploded view of a cover plate according to an embodiment of this application;
FIG. 3 is a schematic diagram of a first insulating partition member of a cover plate according to an embodiment of this application;
FIG. 4 is a schematic diagram of a first current collector plate of a cover plate according to an embodiment of this application;
FIG. 5 is a top view of a battery cell according to an embodiment of this application, where a substrate is not shown;
FIG. 6 is a schematic diagram of a second current collector plate of a cover plate assembly according to an embodiment of this application;
FIG. 7 is a top view of a cover plate assembly according to an embodiment of this application;
FIG. 8 is a schematic diagram of a battery cell according to an embodiment of this application;
FIG. 9 is a cross-sectional view of an end portion of a battery cell according to an embodiment of this application;
FIG. 10 is an enlarged view of a part A circled in FIG. 9;
FIG. 11 is an exploded view of a battery cell according to an embodiment of this application;
FIG. 12 is a top view of a battery cell according to an embodiment of this application, where a cover plate is not shown;
FIG. 13 is a schematic diagram of a battery cell from another angle according to an embodiment of this application;
FIG. 14 is an exploded view of a battery cell from another angle according to an embodiment of this application;
FIG. 15 is a schematic diagram of a sealing structure of a battery cell according to an embodiment of this application;
FIG. 16 is a schematic block diagram of a battery according to an embodiment of this application;
FIG. 17 is a schematic block diagram of a battery assembly according to an embodiment of this application; and
FIG. 18 is a schematic block diagram of an electrical device according to an embodiment of this application.

### Reference numerals:

electrical device 3000; battery assembly 2000; battery 1000;
cover plate 100;
cover plate body 1; cover plate through-hole 11; cover plate protrusion 12; cover plate recess 13; step portion 14;
terminal-pole 2; first terminal-pole segment 21; second terminal-pole segment 22;
first current collector plate 3; extension portion 31; connection protrusion 32; first protrusion portion 321; second protrusion portion 322; recess 33; notch 34; body portion 35;
first insulating partition member 4; anti-rotation groove 41; anti-rotation protrusion 42; first insulating partition member recess 43; first insulating partition member through-hole 44;
second insulating partition member 5; second insulating partition member recess 51;
connection member 6; sealing member 7; first sealing segment 71; second sealing segment 72;
cover plate assembly 200; second current collector plate 201; first connection portion 2011; first connection sub-portion 201a; first side edge 201b; second side edge 201c; second connection portion 2012; second connection sub-portion 201d; third connection portion 2013; third connection sub-portion 201e; fourth connection sub-portion 201f; substrate 202; opening 2021; fitting portion 2022; first insulating member 203; and
battery cell 300; electrode core 301; first tab 3011; second tab 3012; central hole 3013; second insulating member 302; housing 303; housing body 3030; bottom cover plate 3031; liquid injection hole 303a; sealing structure 3032; elastic sealing pad 303b; sealing cover 303c; and partition member 304.

### DESCRIPTION OF EMBODIMENTS

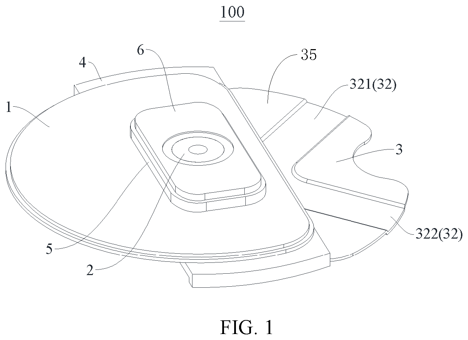

Embodiments of this application are described in detail below. The embodiments described with reference to the accompanying drawings are examples. The following describes a cover plate 100 according to an embodiment of this application with reference to FIG. 1 to FIG. 4. In the following description of this application, the cover plate 100 is described by way of example as being used for a battery cell 300.

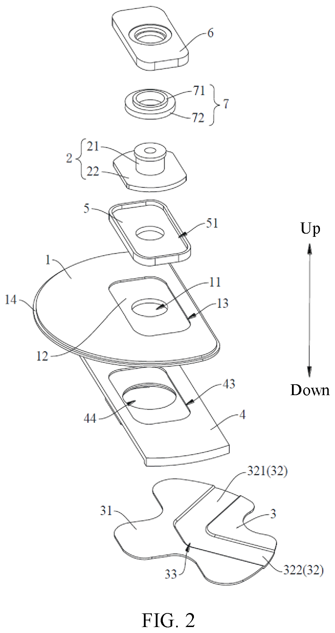

As shown in FIG. 1 and FIG. 2, the cover plate 100 according to an embodiment of a first aspect of this application includes a cover plate body 1, a terminal-pole 2, and a first current collector plate 3.

Specifically, the terminal-pole 2 is disposed on the cover plate body 1, and the terminal-pole 2 is connected to and insulated from the cover plate body 1. For example, in examples of FIG. 1 and FIG. 2, the terminal-pole 2 is inserted into the cover plate body 1, a lower end surface of the terminal-pole 2 is located below the cover plate body 1, and an upper end surface of the terminal-pole 2 passes through the cover plate body 1 to protrude out. This arrangement facilitates a connection between the terminal-pole 2 and the cover plate body 1. In addition, the terminal-pole 2 is connected to and insulated from the cover plate body 1, so that current on the terminal-pole 2 can be prevented from flowing to the cover plate body 1, thereby facilitating current-carrier passage through the terminal-pole 2. When the cover plate 100 is used for the battery cell 300, this facilitates long-term normal use of the battery cell 300.

With reference to FIG. 1, FIG. 2, and FIG. 3, the first current collector plate 3 is connected to the terminal-pole 2. The first current collector plate 3 includes a body portion 35. The body portion 35 is adapted to be connected to a tab (for example, a first tab 3011). The body portion 35 is exposed from the cover plate body 1 in a thickness direction (for example, an up-down direction in FIG. 2) of the first current collector plate 3. A shortest distance between the body portion 35 and a center of the terminal-pole 2 is d₀, and d₀ meets 2 mm ≤ d₀ ≤ 8 mm.

For example, in examples of FIG. 1, FIG. 2, and FIG. 3, a part of the first current collector plate 3 is located below the cover plate body 1 and connected to the terminal-pole 2, and the body portion 35 (that is, the other part of the first current collector plate 3) is exposed from the cover plate body 1. After the first current collector plate 3 is connected to the terminal-pole 2 through welding, the first current collector plate 3 is connected to the first tab 3011 of an electrode core 301 through welding. To reduce impedance and ensure current-carrying capability, it is necessary to weld as many turns of tabs as possible, that is, it is preferable that a welding trajectory of the first current collector plate 3 be closer to a center of the electrode core 301. Therefore, when the shortest distance d₀ between the body portion 35 and the center of the terminal-pole 2 is less than 2 mm, that is, a distance between a side edge of the cover plate body 1 that faces the first current collector plate 3 and a central axis of the terminal-pole 2 is relatively small, an overlapping area between the first current collector plate 3 and the cover plate body 1 in the up-down direction is relatively small. This is not conducive to the connection between the first current collector plate 3 and the terminal-pole 2, and also leaves a relatively small space for installing the terminal-pole 2, which is not conducive to arrangement of the terminal-pole 2. When the shortest distance d₀ between the body portion 35 and the center of the terminal-pole 2 is greater than 8 mm, a welding trajectory between the first current collector plate 3 and the first tab 3011 is relatively far from the center of the terminal-pole 2, which increases impedance and reduces current-carrying-capability. Therefore, the shortest distance d₀ between the body portion 35 and the center of the terminal-pole 2 is set to meet 2 mm ≤ d₀ ≤ 8 mm, so that the distance between the body portion 35 of the first current collector plate 3 that is exposed from the cover plate body 1 and the center of the terminal-pole 2 is properly set. This facilitates the connection of the first current collector plate 3 to the first tab 3011 and the terminal-pole 2, and may also reduce impedance and improve current-carrying capability. In addition, installation space of the terminal-pole 2 is suitable, and this also facilitates arrangement of the terminal-pole 2. In related technologies, to ensure that a welding point between the current collector plate and the tab is as close as possible to the center of the electrode core, the terminal-pole and the current collector plate can only be welded at a middle portion of the electrode core. However, due to presence of an insulating member in between, welding from top to bottom may cause an insulation failure and a short circuit of a battery. Usually, only a method of welding from bottom to top can be selected, and because heat generated by laser welding is excessively high, only torque welding can be used. However, torque welding is not conducive to improving current-carrying capability of the battery cell, and costs are relatively high. Therefore, the solution of this application can avoid using a torque welding process between the terminal-pole 2 and the first current collector plate 3, thereby improving the current-carrying capability of the battery cell 300, and facilitating use of the battery cell 300.

According to the cover plate 100 of this application, the shortest distance d₀ between the body portion 35 and the center of the terminal-pole 2 is set to meet 2 mm ≤ d₀ ≤ 8 mm. This facilitates the connection of the first current collector plate 3 to the first tab 3011 and the terminal-pole 2, and may also reduce impedance and improve the current-carrying capability. In addition, the terminal-pole 2 is connected to and insulated from the cover plate body 1, so that current on the terminal-pole 2 can be prevented from flowing to the cover plate body 1, to avoid a short circuit, thereby facilitating current-carrier passage through the terminal-pole 2. Furthermore, this also facilitates installation of the terminal-pole 2. When the cover plate 100 is used for the battery cell 300, this facilitates long-term normal use of the battery cell 300.

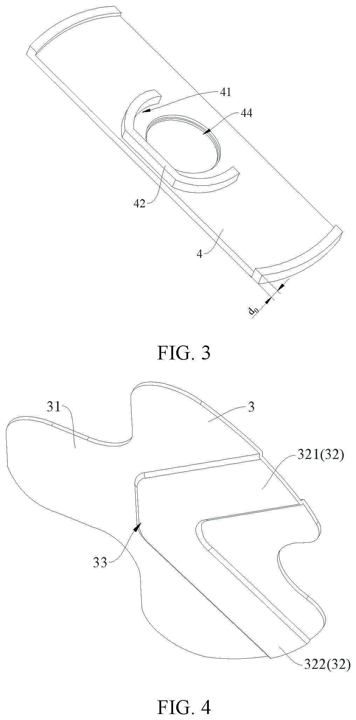

According to some embodiments of this application, with reference to FIG. 3, d₀ further meets 4 mm ≤ d₀ ≤ 8 mm. For example, when the shortest distance d₀ between the body portion 35 and the center of the terminal-pole 2 is less than 4 mm, that is, the distance between the side edge of the cover plate body 1 that faces the first current collector plate 3 and the central axis of the terminal-pole 2 is relatively small, the overlapping area between the first current collector plate 3 and the cover plate body 1 in the up-down direction is relatively small. This is not conducive to the connection between the first current collector plate 3 and the terminal-pole 2. Therefore, the shortest distance d₀ between the body portion 35 and the center of the terminal-pole 2 is set to meet 4 mm ≤ d₀ ≤ 8 mm, so that the distance between the body portion 35 of the first current collector plate 3 that is exposed from the cover plate body 1 and the center of the terminal-pole 2 is more optimally set. This facilitates the connection of the first current collector plate 3 to the first tab 3011 and the terminal-pole 2, and may also reduce impedance and improve the current-carrying capability. For example, d₀ may be set to 2 mm, 4 mm, or 8 mm, to facilitate the connection between the first current collector plate 3 and the terminal-pole 2.

With reference to FIG. 1 and FIG. 2, the first current collector plate 3, the terminal-pole 2, and the cover plate body 1 are integrated. For example, in the examples of FIG. 1 and FIG. 2, after the terminal-pole 2 is connected to the cover plate body 1, the lower end surface of the terminal-pole 2 is connected to an upper side surface of the first current collector plate 3. In this arrangement, the integration enables the terminal-pole 2 and the first current collector plate 3 to be connected in advance, for example, through welding, and then the integrated first current collector plate 3 is connected to the first tab 3011. This improves integration level of the cover plate 100, and facilitates use of the cover plate 100, thereby improving use performance of the cover plate 100. When the cover plate 100 is used for the battery cell 300, this facilitates assembly of the cover plate 100 with another component of the battery cell 300, simplifies assembly operation steps of the battery cell 300, reduces assembly difficulty, and improves assembly efficiency.

According to some embodiments of this application, with reference to FIG. 2, FIG. 9, and FIG. 10, the terminal-pole 2 extends through the cover plate body 1, a first insulating partition member 4 and a sealing member 7 are disposed between an outer peripheral surface of the terminal-pole 2 and the cover plate body 1, the sealing member 7 is sleeved on the terminal-pole 2, and the first insulating partition member 4 is disposed on outer peripheral sides of the sealing member 7 and the terminal-pole 2.

For example, in examples of FIG. 2, FIG. 9, and FIG. 10, an upper end of the terminal-pole 2 passes through the cover plate body 1, the sealing member 7 is annular, the sealing member 7 is sleeved on an outer peripheral surface of the upper end of the terminal-pole 2, a lower end surface of the sealing member 7 is in contact with a lower end of the terminal-pole 2, the first insulating partition member 4 is sleeved on an outer peripheral side of a lower end of the sealing member 7 and an outer peripheral side of the lower end of the terminal-pole 2, an upper end of the sealing member 7 is located between the cover plate body 1 and the terminal-pole 2, and the sealing member 7 has an insulating function. In this arrangement, fitting between a first insulating member 203 and the sealing member 7 effectively permits insulation between the cover plate body 1 and the terminal-pole 2, so that current on the terminal-pole 2 is effectively prevented from flowing to the cover plate body 1, thereby facilitating current-carrier passage through the terminal-pole 2. When the cover plate 100 is used for the battery cell 300, this facilitates long-term normal use of the battery cell 300. In addition, the terminal-pole 2 and the cover plate body 1 compress the sealing member 7 and the first insulating member 203, thereby improving sealing performance of the cover plate 100. Furthermore, the first insulating partition member 4 and the sealing member 7 can separate the terminal-pole 2 from the cover plate body 1, thereby avoiding mutual friction between the terminal-pole 2 and the cover plate body 1, to facilitate long-term use of the terminal-pole 2 and the cover plate body 1.

According to some embodiments of this application, with reference to FIG. 2, FIG. 9, and FIG. 10, the cover plate 100 further includes a connection member 6 and a second insulating partition member 5. The connection member 6 is connected to an end of the terminal-pole 2 that is away from the first current collector plate 3 in the thickness direction of the first current collector plate 3, and the second insulating partition member 5 is disposed between the connection member 6 and the cover plate body 1.

For example, in the examples of FIG. 2, FIG. 9, and FIG. 10, the upper end of the terminal-pole 2 passes through the first insulating partition member 4, the cover plate body 1, a second insulating member 302, and the connection member 6, and is then riveted and welded to the connection member 6. A lower end of the second insulating partition member 5 is located between an outer peripheral surface of a first terminal-pole segment 21 and the cover plate body 1, and a lower end surface of the second insulating partition member 5 is in contact with an upper end surface of the sealing member 7. In this arrangement, the connection member 6 may limit the upper end of the terminal-pole 2, to prevent the terminal-pole 2 from moving downward and separating from the cover plate body 1, thereby improving connection stability between the terminal-pole 2 and the cover plate body 1. In addition, the connection member 6 fits with the upper end of the terminal-pole 2. Through fitting between the terminal-pole 2 and the connection member 6, an overall connection strength between the terminal-pole 2, the first insulating partition member 4, the cover plate body 1, the sealing member 7, the second insulating partition member 5, and the connection member 6 is enhanced, thereby improving integrity of the cover plate 100 and further facilitating use of the cover plate 100. Moreover, sealing performance of assembly of the connection member 6, the terminal-pole 2, and the cover plate body 1 is also improved, thereby improving sealing performance of the cover plate 100. Furthermore, when the cover plate 100 is used for the battery cell 300, a current carrier from the first current collector plate 3 may smoothly flow out after flowing through the terminal-pole 2, thereby shortening a flow path of the current carrier, and reducing structural impedance of the battery cell 300. Moreover, the second insulating partition member 5 is configured to separate the connection member 6 from the cover plate body 1, to avoid a short circuit of the battery cell 300 caused after the connection member 6 is electrically connected to the cover plate body 1.

Further, with reference to FIG. 2, a second insulating partition member recess 51 is formed on the second insulating partition member 5, the connection member 6 is fitted in the second insulating partition member recess 51, and the connection member 6 is insulated from the cover plate body 1 by using the second insulating partition member 5. For example, in the example of FIG. 2, the second insulating partition member recess 51 is formed on an upper side surface of the second insulating partition member 5, a lower side surface of the connection member 6 abuts against a bottom wall of the second insulating partition member recess 51, and the upper end of the terminal-pole 2 passes through the second insulating partition member recess 51 to be connected to the connection member 6.

In this arrangement, the second insulating partition member recess 51 may have a positioning function for the connection member 6, to facilitate rapid assembly of the connection member 6 with the second insulating partition member 5, thereby improving assembly efficiency and assembly accuracy of the connection member 6 and the second insulating partition member 5. In addition, the second insulating partition member recess 51 has a limiting function for the connection member 6, to prevent the connection member 6 from rotating in a plane in which the second insulating partition member 5 is located, thereby improving connection stability between the connection member 6 and the second insulating partition member 5, and improving assembly stability of the cover plate 100. Furthermore, the lower end of the second insulating partition member 5 may insulate and separate the terminal-pole 2 from the cover plate body 1. When the cover plate 100 is used for the battery cell 300, a current carrier on the terminal-pole 2 may be effectively prevented from flowing to the cover plate body 1, so that a short circuit between the terminal-pole 2 and the cover plate body 1 may be avoided, thereby facilitating normal use of the cover plate body 1. Moreover, when the cover plate 100 is used for the battery cell 300, a welding (for example, laser welding) area between the first current collector plate 3 and the tab of the battery cell 300 is increased by using the connection member 6.

According to some embodiments of this application, with reference to FIG. 2, FIG. 9, and FIG. 10, the terminal-pole 2 includes a first terminal-pole segment 21 and a second terminal-pole segment 22 that are connected to each other, the first terminal-pole segment 21 passes through the cover plate body 1 and the second insulating partition member 5 to be connected to the connection member 6, the second terminal-pole segment 22 is located on a side of the cover plate body 1 that faces the first current collector plate 3, and the second terminal-pole segment 22 is connected to the first current collector plate 3. For example, in the examples of FIG. 2, FIG. 9, and FIG. 10, the first terminal-pole segment 21 extends in the up-down direction, an upper end of the first terminal-pole segment 21 passes through the cover plate body 1 and the second insulating partition member 5 to be connected to the connection member 6, a lower end of the first terminal-pole segment 21 is connected to an upper side surface of the second terminal-pole segment 22, the second terminal-pole segment 22 is located on a lower side of the cover plate body 1, and a lower side surface of the second terminal-pole segment 22 is connected to an upper surface of the first current collector plate 3. In this arrangement, the second terminal-pole segment 22 limits the terminal-pole 2 from the lower side of the cover plate body 1, to limit upward movement of the terminal-pole 2, thereby improving connection stability between the terminal-pole 2 and the cover plate body 1, and further improving overall stability of the cover plate 100.

According to some embodiments of this application, with reference to FIG. 2, FIG. 9, and FIG. 10, a cover plate through-hole 11 is formed on the cover plate body 1, the first terminal-pole segment 21 passes through the cover plate through-hole 11, at least a part of the sealing member 7 is disposed between an outer peripheral surface of the first terminal-pole segment 21 and an inner peripheral wall of the cover plate through-hole 11, and the first insulating partition member 4 is disposed on outer peripheral sides of the sealing member 7 and the second terminal-pole segment 22.

For example, in the examples of FIG. 2, FIG. 9, and FIG. 10, the cover plate through-hole 11 extends through the cover plate body 1 in a thickness direction (that is, the up-down direction in FIG. 2) of the cover plate body 1. The upper end of the sealing member 7 (that is, the at least a part of the sealing member 7) is located between the outer peripheral surface of the first terminal-pole segment 21 and the inner peripheral wall of the cover plate through-hole 11, and the first insulating partition member 4 is sleeved on the outer peripheral side of the lower end of the sealing member 7 and an outer peripheral side of the second terminal-pole segment 22. In this arrangement, the cover plate through-hole 11 facilitates positioning of the terminal-pole 2, thereby facilitating assembly of the terminal-pole 2 with the cover plate body 1, and improving assembly efficiency of the cover plate 100. In addition, the cover plate body 1 is separated and insulated from the first terminal-pole segment 21 by using the at least a part of the sealing member 7, and the cover plate body 1 is separated and insulated from the second terminal-pole segment 22 by using the sealing member 7 and the first insulating partition member 4, thereby effectively ensuring separation and insulation between the cover plate body 1 and the terminal-pole 2. Further, when the cover plate 100 is used for the battery cell 300, a short circuit between the terminal-pole 2 and the cover plate body 1 may be effectively avoided, thereby facilitating normal use of the cover plate body 1. It will be noted that the sealing member 7 may be entirely located between the outer peripheral surface of the first terminal-pole segment 21 and the inner peripheral wall of the cover plate through-hole 11, to insulate the first terminal-pole segment 21 from the cover plate through-hole 11, and an upper portion of the first insulating partition member 4 separates an upper surface of the second terminal-pole segment 22 from a lower surface of the cover plate body 1, to implement an insulated connection between the second terminal-pole segment 22 and the cover plate body 1.

For example, in the examples of FIG. 2, FIG. 9, and FIG. 10, the first insulating partition member 4 and the second insulating partition member 5 are respectively located on two sides of the cover plate body 1 in the thickness direction, the first terminal-pole segment 21 sequentially passes through the first insulating partition member 4, the cover plate body 1, and the second insulating partition member 5, the second terminal-pole segment 22 is located between the first insulating partition member 4 and the first current collector plate 3, and a lower side portion of the second insulating partition member 5 is located between the outer peripheral surface of the first terminal-pole segment 21 and the inner peripheral wall of the cover plate through-hole 11. Therefore, the second terminal-pole segment 22 is insulated and separated from the cover plate body 1 by using the first insulating partition member 4, and the second insulating partition member 5 may insulate and separate a part of the first terminal-pole segment 21 from the cover plate body 1, so that an insulated connection is implemented between the terminal-pole 2 and the cover plate body 1. When the cover plate 100 is used for the battery cell 300, a current carrier on the terminal-pole 2 may be effectively prevented from flowing to the cover plate body 1, so that a short circuit between the terminal-pole 2 and the cover plate body 1 may be avoided, thereby facilitating normal use of the terminal-pole 2 and the cover plate body 1. In addition, the first insulating partition member 4 and the second insulating partition member 5 can separate the terminal-pole 2 from the cover plate body 1, thereby avoiding mutual friction between the terminal-pole 2 and the cover plate body 1, to facilitate long-term use of the terminal-pole 2 and the cover plate body 1.

According to some embodiments of this application, with reference to FIG. 2, FIG. 9, and FIG. 10, the sealing member 7 includes a first sealing segment 71 and a second sealing segment 72. The first sealing segment 71 is disposed between the outer peripheral surface of the terminal-pole 2 and the inner peripheral wall of the cover plate through-hole 11. The second sealing segment 72 is connected to an end of the first sealing segment 71 that is adjacent to the first current collector plate 3, and the second sealing segment 72 is located between the first insulating partition member 4 and the first terminal-pole segment 21. For example, in the examples of FIG. 2, FIG. 9, and FIG. 10, the first sealing segment 71 is located above the second sealing segment 72, and an outer peripheral surface of the sealing member 7 is in a step shape. The first sealing segment 71 is located between the outer peripheral surface of the first terminal-pole segment 21 and an inner wall surface of the cover plate through-hole 11, so that the first terminal-pole segment 21 is insulated from the inner wall surface of the cover plate through-hole 11, and an upper surface of the first sealing segment 71 is in contact with a lower surface of the second insulating partition member 5. An upper surface of the second sealing segment 72 abuts against a lower surface of an edge of the cover plate through-hole 11, and a lower surface of the second sealing segment 72 is in contact with an upper surface of the second terminal-pole segment 22. In this arrangement, tightness of a connection between the terminal-pole 2, the cover plate body 1, and the first insulating partition member 4 is enhanced, thereby further improving sealing performance of the cover plate 100, further enhancing an insulation function between the cover plate body 1 and the terminal-pole 2, and further improving use performance of the cover plate 100. In addition, the sealing member 7 has a simple structure, and is easy to produce, thereby improving production efficiency of the sealing member 7.

Further, with reference to FIG. 3, FIG. 4, and FIG. 9, an anti-rotation groove 41 is formed on a side surface of the first insulating partition member 4 that is adjacent to the first current collector plate 3, and the second terminal-pole segment 22 is fitted in the anti-rotation groove 41. The first current collector plate 3 is provided with an extension portion 31, at least a part of an outer peripheral edge of the extension portion 31 is fitted in the anti-rotation groove 41, and the extension portion 31 is connected to a side of the second terminal-pole segment 22 that is away from the cover plate body 1.

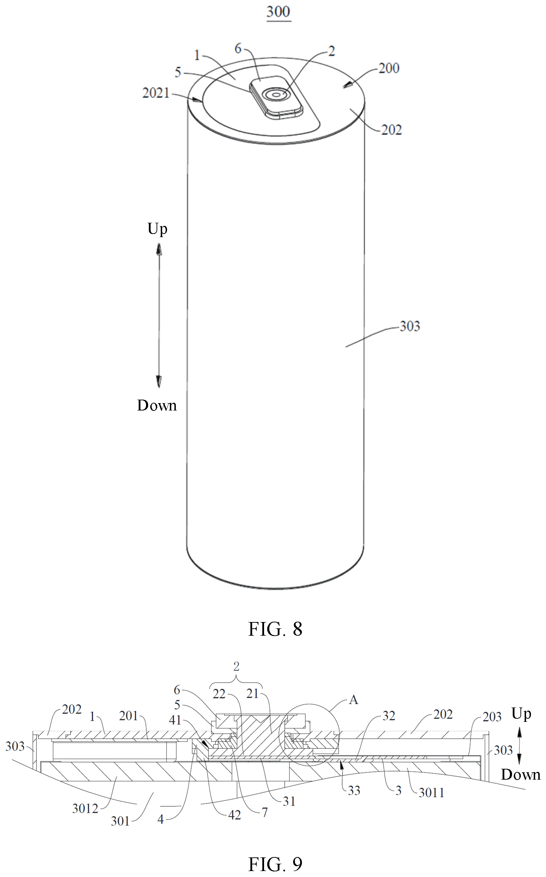

For example, in examples of FIG. 3 and FIG. 9, the anti-rotation groove 41 is formed on a lower surface of the first insulating partition member 4, a side of the second terminal-pole segment 22 is located in the anti-rotation groove 41, and a shape of an outer peripheral surface of the side of the second terminal-pole segment 22 is approximately similar to a shape of a side wall of the anti-rotation groove 41. After the side of the second terminal-pole segment 22 is assembled into the anti-rotation groove 41, an outer peripheral surface of the second terminal-pole segment 22 is attached to the side wall of the anti-rotation groove 41. A side of the extension portion 31 that faces a center of the first current collector plate 3 is connected to a side of the body portion 35. The extension portion 31 is located in the anti-rotation groove 41. A shape of an outer peripheral surface of the extension portion 31 is approximately similar to the shape of the side wall of the anti-rotation groove 41. After the extension portion 31 is assembled into the anti-rotation groove 41, the outer peripheral surface of the extension portion 31 is attached to the side wall of the anti-rotation groove 41, and an upper surface of the extension portion 31 is connected to a lower surface of the second terminal-pole segment 22. It will be noted that the foregoing "at least a part" means that only a part of the outer peripheral edge of the extension portion 31 is fitted in the anti-rotation groove 41, and the other part of the outer peripheral edge of the extension portion 31 is located outside the anti-rotation groove 41. Certainly, the foregoing "at least a part" may also mean that the outer peripheral edge of the extension portion 34 is entirely fitted in the anti-rotation groove 41. This may be specifically disposed based on use, to better meet actual application.

In this arrangement, after the first insulating partition member 4 is assembled with the terminal-pole 2 and the first current collector plate 3, the anti-rotation groove 41 has a limiting function for the second terminal-pole segment 22 and the extension portion 31, so that the terminal-pole 2 and the first current collector plate 3 may be effectively prevented from rotating in a plane perpendicular to the up-down direction, thereby improving assembly stability of the cover plate body 1 with the first current collector plate 3 and the terminal-pole 2. When the cover plate 100 is used for the battery cell 300, the first current collector plate 3 is also prevented from rotating to come into contact with a second current collector plate 201, thereby reducing a requirement for machining accuracy of the electrode core 301, the first tab 3011, and a second tab 3012, and improving production efficiency of the electrode core 301. In addition, during assembly of the first insulating partition member 4 with the second terminal-pole segment 22 and the extension portion 31, the anti-rotation groove 41 facilitates positioning of the second terminal-pole segment 22 and the extension portion 31, thereby helping improve rapid assembly of the first insulating partition member 4 with the terminal-pole 2 and the first current collector plate 3, and further improving assembly efficiency of the cover plate 100. It will be noted that the anti-rotation groove 41 may be formed in the following ways: first, the anti-rotation groove 41 may be formed by a lower surface of the first insulating partition member 4 being recessed in a direction away from the first current collector plate 3. Second, another component disposed on the lower surface of the first insulating partition member 4 and the first insulating partition member 4 jointly define the anti-rotation groove 41. However, this is not limited thereto.

According to some embodiments of this application, with reference to FIG. 3, FIG. 4, and FIG. 9, the at least a part of the outer peripheral edge of the extension portion 31 matches a shape of an inner peripheral wall of the anti-rotation groove 41. For example, in examples of FIG. 3, FIG. 4, and FIG. 9, an outer peripheral edge of the extension portion 31 that is away from the center of the first current collector plate 3 is approximately in an arc shape, and the inner peripheral wall of the anti-rotation groove 41 is approximately in an arc shape. The arc shape of the outer peripheral edge of the extension portion 31 that is away from the center of the first current collector plate 3 is approximately similar to the arc shape of the inner peripheral wall of the anti-rotation groove 41, and the outer peripheral edge of the extension portion 31 that is away from the center of the first current collector plate 3 is attached to the inner peripheral wall of the anti-rotation groove 41. This facilitates full contact between the outer peripheral edge of the extension portion 31 that is away from the center of the first current collector plate 3 and the inner peripheral wall of the anti-rotation groove 41, further improves adaptation of the extension portion 31 to the anti-rotation groove 41, and enhances a limiting function of the anti-rotation groove 41 for the first current collector plate 3, thereby further preventing the first current collector plate 3 from rotating, and further improving use stability of the cover plate 100. It will be noted that the foregoing "at least a part" means that a shape of only a part of the outer peripheral edge of the extension portion 31 matches the shape of the inner peripheral wall of the anti-rotation groove 41, and the other part of the outer peripheral edge of the extension portion 31 does not match the shape of the inner peripheral wall of the anti-rotation groove 41. Certainly, the foregoing "at least a part" may also mean that a shape of the outer peripheral edge of the extension portion 31 entirely matches the shape of the inner peripheral wall of the anti-rotation groove 41. This may be specifically disposed based on use, to better meet actual application.

According to some embodiments of this application, with reference to FIG. 3 and FIG. 9, an anti-rotation protrusion 42 is disposed on the side surface of the first insulating partition member 4 that is adjacent to the first current collector plate 3, the anti-rotation protrusion 42 and the side surface of the first insulating partition member 4 that is adjacent to the first current collector plate 3 jointly define the anti-rotation groove 41, and a side of the anti-rotation groove 41 that is adjacent to the center of the first current collector plate 3 is open. For example, in the examples of FIG. 3 and FIG. 9, the anti-rotation protrusion 42 may be provided in a "C" shape. The shape of the anti-rotation protrusion 42 matches a shape of an end of the second terminal-pole segment 22 that is away from the first current collector plate 3 and a shape of a side of the extension portion 31 that is away from the first current collector plate 3, and the side of the extension portion 31 that is away from the center of the first current collector plate 3 is assembled with the anti-rotation protrusion 42.

In this arrangement, the extension portion 31 of the first current collector plate 3 may be inserted into the anti-rotation groove 41 in a direction perpendicular to the up-down direction from the open side of the anti-rotation groove 41, thereby facilitating assembly of the extension portion 31 with the anti-rotation protrusion 42, and further improving assembly efficiency of the first insulating partition member 4 and the first current collector plate 3. In addition, this arrangement also facilitates full contact between the anti-rotation protrusion 42, the second terminal-pole segment 22, and the extension portion 31, to improve connection stability between the first insulating partition member 4, the terminal-pole 2, and the first current collector plate 3. Furthermore, the anti-rotation protrusion 42 has a simple structure, thereby simplifying a structure of the first insulating partition member 4, and further facilitating mass production of the first insulating partition member 4. However, this is not limited thereto. It will be noted that the anti-rotation protrusion 42 may alternatively include a plurality of cylindrical bodies or spherical bodies (not shown in the figure), and the plurality of cylindrical bodies or spherical bodies are spaced apart in a "C" shape or another shape, or the plurality of cylindrical bodies or spherical bodies are continuously arranged in a "C" shape, so that the anti-rotation protrusion 42 has limiting and anti-rotation functions for the second terminal-pole segment 22. The anti-rotation protrusion 42 may alternatively be provided in another shape, provided that the anti-rotation protrusion 42 has limiting and anti-rotation functions for the second terminal-pole segment 22.

Optionally, the terminal-pole 2 in the cover plate 100 is connected to the first current collector plate 3 by welding. Therefore, a connection between the terminal-pole 2 and the first current collector plate 3 is relatively secure, thereby preventing the first current collector plate 3 from detaching from the terminal-pole 2, and further improving stability of long-term use of the first current collector plate 3 and the terminal-pole 2. In addition, the welding method is simple, thereby improving feasibility of the welding process. However, this is not limited thereto.

According to some embodiments of this application, with reference to FIG. 9, a thickness of the first insulating partition member 4 is d₁, and d₁ meets 0.5 mm ≤ d₁ ≤ 2.0 mm. For example, the first insulating partition member 4 is generally of a plate-like structure or of a structure similar to a plate-like structure. The thickness of the first insulating partition member 4 is a thickness of a body portion of the first insulating partition member 4, and the body portion of the first insulating partition member 4 does not include the anti-rotation groove 41 and the anti-rotation protrusion 42 on the first insulating partition member 4. When the thickness d₁ of the first insulating partition member 4 is greater than 2 mm, more materials are used for the first insulating partition member 4, which increases production costs of the first insulating partition member 4, and further increases production costs of the cover plate 100. Moreover, space occupied by the first insulating partition member 4 is increased, which increases an overall size of the cover plate 100, which is not conducive to use of the cover plate 100. When the thickness d₁ of the first insulating partition member 4 is less than 0.5 mm, the thickness of the first insulating partition member 4 is relatively small, and production difficulty of the first insulating partition member 4 is high. Consequently, the first insulating partition member 4 is not easy to produce, and wear resistance of the first insulating partition member 4 is further reduced, making the first insulating partition member 4 prone to friction damage, and shortening service life of the first insulating partition member 4. Therefore, the thickness d₁ of the first insulating partition member 4 is set to meet 0.5 mm ≤ d₁ ≤ 2.0 mm, so that the production costs of the first insulating partition member 4 are reduced, thereby reducing the production costs of the cover plate 100. In addition, the thickness of the first insulating partition member 4 is moderate, and this facilitates production of the first insulating partition member 4. Furthermore, wear resistance of the first insulating partition member 4 is improved, thereby preventing the first insulating partition member 4 from being damaged, and prolonging the service life of the first insulating partition member 4.

Optionally, the first insulating partition member 4 is an injection molded part. Therefore, molding quality of the first insulating partition member 4 is improved, and production efficiency and machining accuracy of the first insulating partition member 4 are also improved. In addition, integrity of the first insulating partition member 4 is further improved, thereby facilitating long-term use of the first insulating partition member 4.

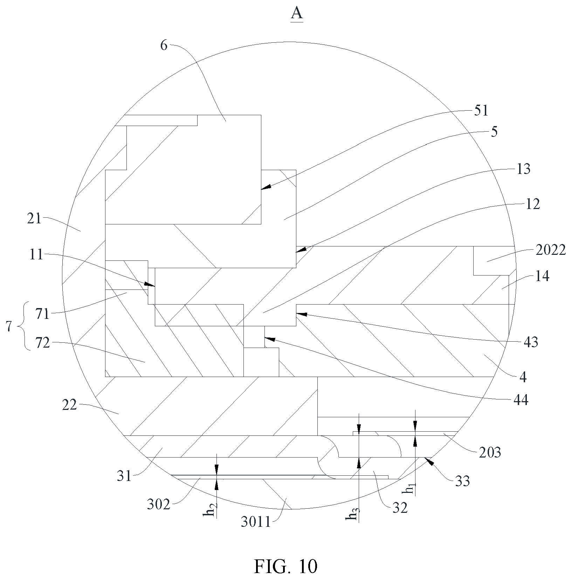

According to some embodiments of this application, with reference to FIG. 9 and FIG. 10, a cover plate protrusion 12 is disposed on a side surface of the cover plate body 1 that is adjacent to the first insulating partition member 4 in a thickness direction (that is, the up-down direction) of the cover plate body 1, and the cover plate through-hole 11 extends through the cover plate protrusion 12. A first insulating partition member recess 43 is formed on a side surface of the first insulating partition member 4 that is adjacent to the cover plate body 1 in the thickness direction of the cover plate body 1, a first insulating partition member through-hole 44 is formed on a bottom wall of the first insulating partition member recess 43, the first terminal-pole segment 21 passes through the first insulating partition member through-hole 44, and the cover plate protrusion 12 is fitted in the first insulating partition member recess 43.

For example, in examples of FIG. 9 and FIG. 10, the first insulating partition member through-hole 44 extends through the first insulating partition member 4 in a thickness direction of the first insulating partition member 4, the first insulating partition member through-hole 44 is opposite to the cover plate through-hole 11, and the first terminal-pole segment 21 sequentially passes through the first insulating partition member through-hole 44 and the cover plate through-hole 11 to extend above the cover plate body 1. A lower surface of the cover plate protrusion 12 is in contact with the bottom wall of the first insulating partition member recess 43, an outer peripheral surface of the cover plate protrusion 12 is in contact with an inner side wall of the first insulating partition member recess 43, and the cover plate through-hole 11 extends through the cover plate protrusion 12. Therefore, through fitting between the cover plate protrusion 12 and the first insulating partition member recess 43, the first insulating partition member recess 43 has a positioning function for the cover plate protrusion 12, thereby facilitating rapid assembly of the cover plate body 1 with the first insulating partition member 4, and further improving assembly efficiency of the cover plate 100. In addition, the cover plate protrusion 12 has a simple structure, thereby facilitating assembly of the cover plate body 1 with another component, and simplifying a structure of the cover plate body 1. This facilitates production and machining of the cover plate body 1.

Optionally, with reference to FIG. 9 and FIG. 10, the cover plate protrusion 12 is formed by a part of a side surface of the cover plate body 1 that is away from the first current collector plate 3 in the thickness direction of the cover plate body 1, protruding toward a side surface of the first current collector plate 3. For example, in the examples of FIG. 9 and FIG. 10, the cover plate protrusion 12 is formed by a part of an upper surface of the cover plate body 1 protruding downward. In this arrangement, the cover plate protrusion 12 has a simple structure, and is convenient for production and machining, thereby improving production efficiency of the cover plate body 1. In addition, integrity of the cover plate body 1 is improved, thereby improving structural strength of the cover plate protrusion 12, and improving stability of long-term use of the cover plate body 1.

According to some embodiments of this application, with reference to FIG. 9 and FIG. 10, the cover plate protrusion 12 forms a cover plate recess 13 on the side surface of the cover plate body 1 that is away from the first current collector plate 3 in the thickness direction of the cover plate body 1, and at least a part of the second insulating partition member 5 is fitted in the cover plate recess 13. For example, in the examples of FIG. 9 and FIG. 10, the cover plate protrusion 12 is disposed on the lower side of the cover plate body 1, the cover plate recess 13 is formed at a corresponding position on an upper side of the cover plate body 1, the cover plate through-hole 11 extends through a bottom wall of the cover plate recess 13 and the cover plate protrusion 12, the lower end of the second insulating partition member 5 (that is, the at least a part of the second insulating partition member 5) is fitted in the cover plate recess 13, and an outer peripheral surface of the lower end of the second insulating partition member 5 is attached to an inner wall surface of the cover plate recess 13. In this arrangement, the cover plate recess 13 may have a positioning function for the second insulating member 5, to facilitate assembly of the cover plate body 1 with the second insulating partition member 5, thereby improving assembly efficiency of the cover plate 100. In addition, the cover plate recess 13 may have a limiting function for the second insulating member 5, to prevent the second insulating partition member 5 from rotating in a plane of the cover plate body 1, thereby improving connection stability between the cover plate body 1 and the second insulating partition member 5, and further improving use stability of the cover plate 100. It will be noted that the second insulating partition member 5 may alternatively be entirely fitted in the cover plate recess 13, to effectively separate the cover plate body 1 from the connection member 6. A fitting condition between the second insulating partition member 5 and the cover plate recess 13 may be specifically provided based on use, to better meet actual application.

Optionally, the connection member 6 is polygonal or oblong. For example, when the connection member 6 is polygonal, a contact area between the connection member 6 and the second insulating partition member 5 is relatively large, and this increases an area in which the connection member 6 presses against the second insulating partition member 5, thereby improving assembly strength of the connection member 6 with the second insulating partition member 5, and further improving connection strength between various components of the cover plate 100. When the connection member 6 is oblong, the contact area and a welding area between the connection member 6 and the second insulating partition member 5 are increased. In addition, the connection member 6 has a simple structure, and is easy to produce, thereby improving production efficiency of the connection member 6. Furthermore, four corners of the connection member 6 may be provided in an arc shape, thereby facilitating installation and transportation, and improving aesthetics of the connection member 6.

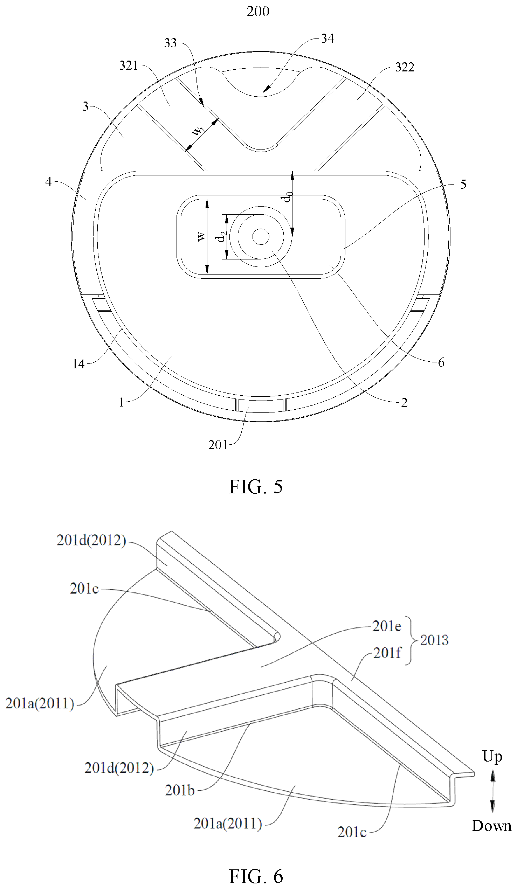

According to some embodiments of this application, with reference to FIG. 5, a width of the connection member 6 is w, a diameter of the terminal-pole 2 is d₂, and w and d₂ meet 3.5 mm ≤ w - d₂ ≤ 6 mm. For example, when a difference between the width w of the connection member 6 and the diameter d₂ of the terminal-pole 2 is greater than 6 mm, a connection area between the connection member 6 and the terminal-pole 2 is relatively small, and the width of the connection member 6 is relatively large, which reduces connection stability between the connection member 6 and the terminal-pole 2. When the difference between the width w of the connection member 6 and the diameter d₂ of the terminal-pole 2 is less than 3.5 mm, a distance between an edge of the connection member 6 in a width direction and an edge of the upper end of the terminal-pole 2 is relatively small, and the width of the connection member 6 is also relatively small, which reduces structural strength of the connection member 6, and is not conducive to long-term use of the connection member 6. Therefore, the width w of the connection member 6 and the diameter d₂ of the terminal-pole 2 are set to meet 3.5 mm ≤ w - d₂ ≤ 6 mm, so that the distance between the edge of the connection member 6 in the width direction and the edge of the upper end of the terminal-pole 2 is moderate. This improves connection stability between the connection member 6 and the terminal-pole 2, in addition to improving structural strength of the connection member 6, thereby facilitating long-term stable use of the connection member 6 and the terminal-pole 2.

Optionally, the connection member 6 is an aluminum stamped part. Therefore, production and machining efficiency of the connection member 6 is relatively high, and machining accuracy is also relatively high, thereby facilitating long-term use of the connection member 6. In addition, flatness of the connection member 6 is improved through aluminum stamping. Furthermore, the aluminum part has good electrical conductivity, thereby facilitating current-carrier passage through the connection member 6.

Optionally, the sealing member 7 is formed by injection molding of fluorine rubber. The fluorine rubber has excellent corrosion resistance and atmospheric aging resistance, thereby prolonging service life of the sealing member 7. In addition, through injection molding, molding quality and overall stability of the sealing member 7 are improved, and production efficiency and machining accuracy of the sealing member 7 are also improved, thereby further facilitating long-term use of the sealing member 7.

Optionally, the cover plate body 1 is a steel stamped part. Therefore, production and machining efficiency of the cover plate body 1 is relatively high, and machining accuracy is also relatively high, thereby improving connection strength between the cover plate body 1, the terminal-pole 2, and the first current collector plate 3. Moreover, flatness of the cover plate body 1 is also improved. In addition, steel has corrosion resistance, thereby facilitating long-term use of the cover plate body 1. Furthermore, steel has good electrical conductivity, thereby facilitating an electrical connection between the second current collector plate 201 and the cover plate body 1, and facilitating normal use of the battery cell 300.

According to some embodiments of this application, with reference to FIG. 2 and FIG. 4, a connection protrusion 32 protruding away from the cover plate body 1 in the thickness direction of the first current collector plate 3 is disposed on the first current collector plate 3. For example, in examples of FIG. 2 and FIG. 4, the connection protrusion 32 is formed by a partial region of the first current collector plate 3 protruding in a direction away from the cover plate body 1. In this arrangement, when the cover plate 100 is used for the battery cell 300, the first current collector plate 3 is connected to the first tab 3011 of the battery cell 300 by using the connection protrusion 32, thereby facilitating an interference fit between the first current collector plate 3 and the first tab 3011. Therefore, when the first current collector plate 3 is connected to the first tab 3011 by welding, a welding yield is improved, so that connection strength between the first current collector plate 3 and the first tab 3011 is improved. In addition, the connection protrusion 32 has a simple structure, thereby simplifying a structure of the first current collector plate 3, and facilitating mass production of the first current collector plate 3.

Further, with reference to FIG. 4, the connection protrusion 32 includes a first protrusion portion 321 and a second protrusion portion 322, one end of the first protrusion portion 321 is connected to one end of the second protrusion portion 322, and the other end of the first protrusion portion 321 and the other end of the second protrusion portion 322 extend in a direction in which the two ends are away from each other.

For example, in the example of FIG. 4, the connection protrusion 32 may be provided in a "V" shape. One end of the first protrusion portion 321 that is close to the center of the first current collector plate 3 is connected to one end of the second protrusion portion 322 that is close to the center of the first current collector plate 3, the other end of the first protrusion portion 321 and the other end of the second protrusion portion 322 both extend in a direction away from the center of the first current collector plate 3, and the first protrusion portion 321 and the second protrusion portion 322 are symmetrical with respect to a center line of the first current collector plate 3. In this arrangement, the connection protrusion 32 has a simple structure and a suitable design. Therefore, after the first current collector plate 3 is connected to the first tab 3011 of the battery cell 300, stability of an overall connection between the first current collector plate 3 and the first tab 3011 is improved, thereby preventing the first current collector plate 3 from shaking or rotating, and further improving use stability of the battery cell 300. In addition, machining difficulty of the connection protrusion 32 is low, thereby reducing machining difficulty of the first current collector plate 3, and improving production efficiency of the first current collector plate 3.

With reference to FIG. 4 and FIG. 5, an included angle between the first protrusion portion 321 and the second protrusion portion 322 is β, and β meets 20° ≤ β ≤ 80°. For example, when the included angle β between the first protrusion portion 321 and the second protrusion portion 322 is greater than 80°, a distance between the other end of the first protrusion portion 321 and the other end of the second protrusion portion 322 is relatively large, and consequently, a distance between welding points at an edge of the first current collector plate 3 is relatively large, which reduces connection stability between the first current collector plate 3 and the first tab 3011 of the battery cell 300. When the included angle β between the first protrusion portion 321 and the second protrusion portion 322 is less than 20°, the distance between the other end of the first protrusion portion 321 and the other end of the second protrusion portion 322 is relatively small, and a distance between two opposite sides of the first protrusion portion 321 and the second protrusion portion 322 is relatively small, which reduces uniformity of distribution of weld points of the first current collector plate 3, and reduces connection stability of the first current collector plate 3. Therefore, the included angle β between the first protrusion portion 321 and the second protrusion portion 322 is set to meet 20° ≤ β ≤ 80°, so that position distribution of the first protrusion portion 321 and the second protrusion portion 322 is optimised, thereby improving uniformity of distribution of the welding points of the first current collector plate 3, improving connection stability of the first current collector plate 3, and facilitating long-term use of the first current collector plate 3.

Optionally, with reference to FIG. 4 and FIG. 5, a notch 34 is formed on a side edge of the first current collector plate 3 that is away from the second current collector plate 201. For example, in examples of FIG. 4 and FIG. 5, the notch 34 is recessed toward the center of the first current collector plate 3, and the notch 34 may be provided in a semicircular shape. Therefore, when the first current collector plate 3 is connected to the first tab 3011 of the battery cell 300 through welding, in a cooling process of the welded first current collector plate 3, some regions shrink more than other regions due to different thermal expansion coefficients, and consequently, residual stress is generated in a welded region. Arrangement of the notch 34 can alleviate the residual stress, thereby preventing poor welding caused by thermal deformation during the welding between the first current collector plate 3 and the first tab 3011 of the battery cell 300, and further improving connection strength between the first current collector plate 3 and the first tab 3011 of the battery cell 300. For example, the notch 34 is located between the other end of the first protrusion portion 321 and the other end of the second protrusion portion 322. Therefore, the notch 34 is formed at a position adjacent to the middle of the edge of the first current collector plate 3, to better alleviate the residual stress. However, this is not limited thereto.

According to some embodiments of this application, with reference to FIG. 2 and FIG. 4, the connection protrusion 32 is formed by a part of a side surface of the first current collector plate 3 that is adjacent to the terminal-pole 2 in the thickness direction of the first current collector plate 3, protruding toward a side surface away from the terminal-pole 2; and the connection protrusion 32 forms a recess 33 on the side surface of the first current collector plate 3 that is adjacent to the terminal-pole 2 in the thickness direction of the first current collector plate 3, so that the connection protrusion 32 is formed on the side surface away from the terminal-pole 2. For example, in the examples of FIG. 2 and FIG. 4, the recess 33 is formed by a part of the upper surface of the first current collector plate 3 being recessed downward, thereby forming the connection protrusion 32, and the connection protrusion 32 forms the V-shaped recess 33 on the upper surface of the first current collector plate 3. In this arrangement, a thickness of a region of the first current collector plate 3 in which the connection protrusion 32 is located is reduced, thereby shortening a path through which a current carrier flows through the connection protrusion 32. This further facilitates use of the first current collector plate 3, and further reduces structural impedance. In addition, the connection protrusion 32 and the recess 33 have a simple structure, and machining difficulty is relatively low, thereby reducing production costs of the first current collector plate 3, and improving production efficiency of the first current collector plate 3.

Optionally, with reference to FIG. 9 and FIG. 10, a depth of the recess 33 is h₃, and h₃ meets 0 mm < h₃ ≤ 2 mm. When the depth h₃ of the recess 33 is greater than 2 mm, a height of a side wall of the recess 33 is relatively high, thereby reducing structural strength of the connection protrusion 32, and further reducing structural strength of the first current collector plate 3. When the depth h₃ of the recess 33 is equal to 0 mm, a lower surface of the first current collector plate 3 is completely in contact with and welded to the first tab 3011 of the battery cell 300, resulting in a relatively large welding area and relatively high welding costs, and this is not conducive to a connection between the first current collector plate 3 and another component of the battery cell 300. Therefore, the depth h₃ of the recess 33 is set to meet 0 mm < h₃ ≤ 2 mm, thereby improving the structural strength of the connection protrusion 32, and further improving the structural strength of the first current collector plate 3. In addition, this reduces welding costs of the first current collector plate 3, and also facilitates the connection between the first current collector plate 3 and the another component of the battery cell 300.

Optionally, the first current collector plate 3 and the terminal-pole 2 are both formed by aluminum stamping. Aluminum parts have some structural strength. Therefore, structural strength of the first current collector plate 3 and the terminal-pole 2 is improved, thereby facilitating long-term stable use of the first current collector plate 3 and the terminal-pole 2. In addition, flatness of the first current collector plate 3 and the terminal-pole 2 is improved through aluminum stamping, thereby improving use performance of the first current collector plate 3 and the terminal-pole 2. Moreover, a lower surface of the terminal-pole 2 is designed to be flat, thereby facilitating welding between the terminal-pole 2 and the first current collector plate 3. Furthermore, the aluminum parts have electrical conductivity, thereby facilitating current-carrier passage through the first current collector plate 3 and the terminal-pole 2. However, this is not limited thereto.

With reference to FIG. 5, a cover plate assembly 200 according to an embodiment of a second aspect of this application includes a cover plate 100 and a second current collector plate 201. The cover plate 100 is the cover plate 100 according to any one of the foregoing embodiments of the first aspect of this application. The second current collector plate 201 is connected to the cover plate body 1 of the cover plate 100, the second current collector plate 201 is insulated from the terminal-pole 2 and the first current collector plate 3 of the cover plate 100, and the second current collector plate 201 and the first current collector plate 3 are respectively connected to tabs with opposite polarities. For example, the first current collector plate 3 is connected to the first tab 3011, and the second current collector plate 201 is connected to the second tab 3012.

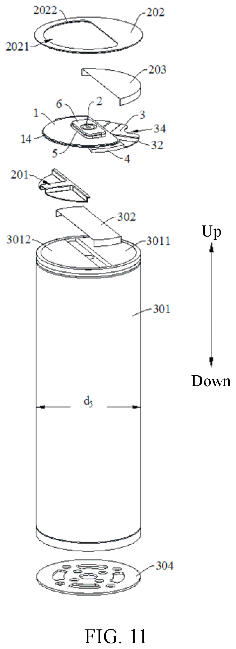

For example, in examples of FIG. 5 and FIG. 11, the second current collector plate 201 is located on the lower side of the cover plate body 1, an upper side surface of the second current collector plate 201 is connected to a lower side surface of the cover plate body 1, and the second current collector plate 201 is opposite to the first current collector plate 3. This arrangement facilitates a connection between the cover plate 100 and the second current collector plate 201, thereby improving assembly efficiency of the cover plate 100 and the second current collector plate 201. In addition, a short circuit between the second current collector plate 201 and each of the terminal-pole 2 and the first current collector plate 3 of the cover plate 100 is avoided, so that the second current collector plate 201 and the cover plate 100 can be normally used. When the cover plate assembly 200 is used for the battery cell 300, the battery cell 300 has the first tab 3011 and the second tab 3012, the first tab 3011 is connected to the first current collector plate 3, the second tab 3012 is connected to the second current collector plate 201, and the first tab 3011 and the second tab 3012 have opposite polarities. A current-carrier flow path of a positive electrode of the battery cell 300 passes sequentially through the first tab 3011, the first current collector plate 3, and the terminal-pole 2, and then led out. A current-carrier flow path of a negative electrode of the battery cell 300 passes sequentially through the second tab 3012, the second current collector plate 201, and the cover plate body 1, and then led out. Therefore, the current-carrier flow paths of both the positive electrode and the negative electrode of the battery cell 300 are relatively short, thereby further reducing structural impedance of the battery cell 300, and further facilitating use of the battery cell 300.

According to some optional embodiments of this application, with reference to FIG. 6, the second current collector plate 201 includes a first connection portion 2011, a second connection portion 2012, and a third connection portion 2013 that are sequentially connected. The second current collector plate 201 is connected to the cover plate 100 by using the third connection portion 2013, the second connection portion 2012 is connected between the third connection portion 2013 and the first connection portion 2011, and the second current collector plate 201 is connected to the second tab 3012 by using the first connection portion 2011.

For example, in an example of FIG. 6, a lower end of the second connection portion 2012 is connected to a side edge of an upper surface of the first connection portion 2011, a side edge of the third connection portion 2013 is connected to an upper end of the second connection portion 2012, and an upper surface of the third connection portion 2013 is connected (for example, welded) to the lower surface of the cover plate body 1. When the second current collector plate 201 is used for the battery cell 300, a lower surface of the first connection portion 2011 is connected to an upper surface of the second tab 3012. Therefore, the second connection portion 2012 may support the first connection portion 2011 and the third connection portion 2013, that is, function as a reinforcing rib, thereby improving structural strength of the second current collector plate 201, and facilitating long-term stable use of the second current collector plate 201. Moreover, flatness of a connection between the second current collector plate 201 and the second tab 3012 is improved, making it less prone to collapse under a force. In addition, the third connection portion 2013 is connected to the cover plate body 1, so that the second current collector plate 201 is securely connected to the cover plate body 1, thereby improving stability of the cover plate assembly 200. Furthermore, the first connection portion 2011 is connected to the second tab 3012, and a contact area between the first connection portion 2011 and the second tab 3012 is relatively large, so that the connection between the first connection portion 2011 and the second tab 3012 is convenient and secure.

According to some embodiments of this application, with reference to FIG. 6, the first connection portion 2011 and the third connection portion 2013 each extend in a direction perpendicular to a central axis of the cover plate 100, and the second connection portion 2012 is perpendicularly connected between the first connection portion 2011 and the third connection portion 2013. For example, in an example of FIG. 6, the first connection portion 2011 and the third connection portion 2013 are parallel to a surface of the first current collector plate 3, and the second connection portion 2012 is perpendicular to the first connection portion 2011 and the third connection portion 2013. In this arrangement, flatness of the second current collector plate 201 is improved, thereby facilitating a connection between the second current collector plate 201 and the cover plate body 1 through the third connection portion 2013, and improving a welding yield between the second current collector plate 201 and the cover plate body 1. This may effectively prevent the second current collector plate 201 from detaching from the cover plate 100, thereby improving use stability of the second current collector plate 201. In addition, the second current collector plate 201 has a simple structure, and is convenient for production and machining, thereby improving production efficiency of the second current collector plate 201, and reducing production costs of the second current collector plate 201.

According to some embodiments of this application, with reference to FIG. 6, the first connection portion 2011 includes two first connection sub-portions 201a spaced apart, each first connection sub-portion 201a includes a first side edge 201b and a second side edge 201c that are perpendicular to each other, the first side edges 201b of the two first connection sub-portions 201a are opposite to each other, and the second side edges 201c of the two first connection sub-portions 201a are located on the same straight line. For example, in the example of FIG. 6, the two first connection sub-portions 201a are respectively located on two sides of the second connection portion 2012, the first connection sub-portion 201a may be provided in a sector shape, and the first side edge 201b and the second side edge 201c are two straight-line edges of the sector shape. Therefore, both the two first connection sub-portions 201a can be connected to the second tab 3012 of the battery cell 300, thereby improving overall stability of the connection between the second current collector plate 201 and the second tab 3012. In addition, the connection is secure, thereby preventing the second current collector plate 201 from detaching from the second tab 3012, and improving use performance of the battery cell 300. In addition, the two first connection sub-portions 201a are provided, so that a contact area between the second current collector plate 201 and the second tab 3012 is increased, thereby improving connection strength between the second current collector plate 201 and the second tab 3012, and also reducing structural impedance of the battery cell 300.

With reference to FIG. 6, the second connection portion 2012 includes two second connection sub-portions 201d spaced apart, a side of one second connection sub-portion 201d is connected to the first side edge 201b and the second side edge 201c of one first connection sub-portion 201a, and a side of the other second connection sub-portion 201d is connected to the first side edge 201b and the second side edge 201c of the other first connection sub-portion 201a. For example, in the example of FIG. 6, the two second connection sub-portions 201d one-to-one correspond to the two first connection sub-portions 201a, the two second connection sub-portions 201d are spaced apart in an arrangement direction of the two first connection sub-portions 201a, the second connection sub-portion 201d may be vertically arranged, and the second connection sub-portion 201d is bent and extended in directions of the first side edge 201a and the second side edge 201b, with a bent portion having an arc-shaped transition. In this arrangement, the second connection sub-portion 201d has a simple structure, thereby simplifying a structure of the second current collector plate 201, reducing production difficulty of the second current collector plate 201, and improving production efficiency of the second current collector plate 201. Furthermore, structural strength of the second connection sub-portion 201d is enhanced, thereby further improving a supporting function of the second connection portion 2012 for the first connection portion 2011 and the third connection portion 2013, and improving structural strength of the second current collector plate 201.

With reference to FIG. 6, the third connection portion 2013 includes a third connection sub-portion 201e and a fourth connection sub-portion 201f. The third connection sub-portion 201e is connected between the other sides of the two second connection sub-portions 201d that are opposite to the first side edges 201b of the two first connection sub-portions 201a, one side of the fourth connection sub-portion 201f is connected to the third connection sub-portion 201e and the other sides of the two second connection sub-portions 201d that are opposite to the second side edges 201c of the two first connection sub-portions 201a, and the other side of the fourth connection sub-portion 201f extends in a direction away from the first connection portion 2011.

For example, in the example of FIG. 6, the third connection portion 2013 is approximately in a "T" shape, the third connection sub-portion 201e is a vertical segment of the "T", the fourth connection sub-portion 201f is a horizontal segment of the "T", and two sides of the third connection sub-portion 201e in a width direction are respectively connected to sides of the two second connection sub-portions 201d that are away from the two first side edges 201b (that is, upper sides of the second connection sub-portions 201d that are opposite to the first side edges 201b). A plane in which the fourth connection sub-portion 201f is located is parallel to a plane in which the first connection sub-portion 201a is located, a side of the fourth connection sub-portion 201f that faces the first connection portion 2011 is connected to sides of the two second connection sub-portions 201d that are away from the two second side edges 201c, and the side of the fourth connection sub-portion 201f that faces the first connection portion 2011 is connected to a side of the third connection sub-portion 201e that faces the fourth connection sub-portion 210f.

In this arrangement, the two second connection sub-portions 201d are connected together by using the third connection sub-portion 201e, thereby forming the second current collector plate 201 as a whole, and further improving structural strength of the second current collector plate 201. Moreover, the third connection sub-portion 201e facilitates the connection between the second current collector plate 201 and the cover plate body 1. In addition, an area of the third connection portion 2013 is increased by providing the fourth connection sub-portion 201f, thereby improving connection stability between an upper surface of the second current collector plate 201 and the lower surface of the cover plate body 1 when the second current collector plate 201 is connected to the cover plate 100. Furthermore, the second current collector plate 201 has a simple structure, and is easy to produce, thereby improving production efficiency of the second current collector plate 201. Moreover, the fourth connection sub-portion 201f functions as a reinforcing rib, thereby improving strength and flatness of the second current collector plate 201, and improving a welding yield.

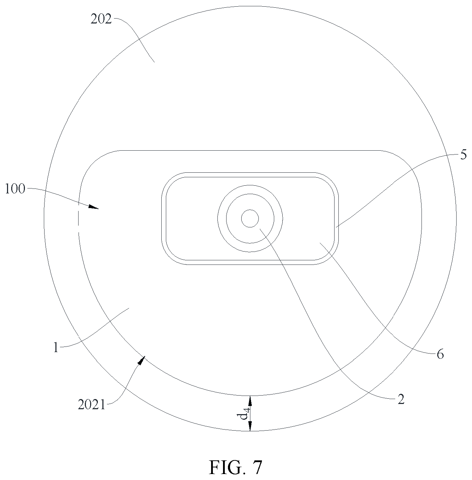

According to some embodiments of this application, with reference to FIG. 7 and FIG. 11, the cover plate assembly 200 further includes a substrate 202. The substrate 202 is connected to a side of the cover plate 100 that is away from the second current collector plate 201 in a thickness direction (that is, an up-down direction) of the cover plate 100, an opening 2021 is formed on the substrate 202, and the terminal-pole 2 is exposed from the opening 2021. For example, in examples of FIG. 7 and FIG. 11, the substrate 202 is located above the cover plate body 1, and an edge of the opening 2021 fits with an outer peripheral edge of the cover plate body 1. In this arrangement, the substrate 202 may shield a part of the cover plate 100, thereby improving a protection function of the substrate 202 for the cover plate 100, and further prolonging service life of the cover plate 100. In addition, a shape of the cover plate assembly 200 is relatively simple, thereby improving aesthetics of the cover plate assembly 200. Furthermore, this facilitates welding between the first current collector plate 3 and the first tab 3011, thereby facilitating assembly of the battery cell 300.

According to some embodiments of this application, with reference to FIG. 9 and FIG. 10, an outer peripheral edge of the cover plate 100 has a step portion 14, an edge of the opening 2021 has a fitting portion 2022 extending toward a center of the opening 2021, and the fitting portion 2022 is fitted on the step portion 14. For example, in examples of FIG. 9 and FIG. 10, an edge of the cover plate body 1 forms the step portion 14, and the fitting portion 2022 is also provided in a step shape. This arrangement facilitates assembly and pressing of the cover plate body 1 and the substrate 202, and improves connection stability between the cover plate body 1 and the substrate 202, thereby improving feasibility of a process, and improving assembly efficiency and assembly stability of the cover plate 100 and the substrate 202. In addition, the cover plate body 1 and the substrate 202 are not prone to relative movement, thereby improving stability of long-term use of the substrate 202.

According to some embodiments of this application, with reference to FIG. 7, on a side on which the second current collector plate 201 is located, a shortest distance between the edge of the opening 2021 and an outer peripheral edge of the substrate 202 is d₄, and d₄ meets 1.5 mm ≤ d₄ ≤ 4 mm.

For example, when the shortest distance d₄ between the edge of the opening 2021 and the outer peripheral edge of the substrate 202 is greater than 4 mm, a cross-sectional area of the cover plate body 1 is relatively small based on a fitting condition between the edge of the opening 2021 and the edge of the cover plate body 1, so that a contact area between the cover plate body 1 and the second current collector plate 201 is relatively small, thereby reducing a welding area between the cover plate body 1 and the second current collector plate 201. When the cover plate assembly 200 is used for the battery cell 300, structural impedance of the battery cell 300 is increased. When the shortest distance d₄ between the edge of the opening 2021 and the outer peripheral edge of the substrate 202 is less than 1.5 mm, a distance between the edge of the opening 2021 and the outer peripheral edge of the substrate 202 is relatively small on the side on which the second current collector plate 201 is located, and welding of the substrate 202 to the cover plate body 1 and welding of the substrate 202 to a housing 303 of the battery cell 300 may affect each other, which reduces welding yield of the cover plate assembly 200. In addition, structural strength of the substrate 202 is reduced, and service life of the substrate 202 is shortened. Therefore, the shortest distance d₄ between the edge of the opening 2021 and the outer peripheral edge of the substrate 202 is set to meet 1.5 mm ≤ d₄ ≤ 4 mm, so that the cross-sectional area of the cover plate body 1 is increased, thereby increasing the contact area between the cover plate body 1 and the second current collector plate 201, and reducing structural impedance of the battery cell 300 when the cover plate assembly 200 is used for the battery cell 300. In addition, welding of the substrate 202 to the cover plate body 1 and welding of the substrate 202 to the housing 303 of the battery cell 300 are prevented from affecting each other, thereby improving the welding yield of the cover plate assembly 200.

According to some embodiments of this application, with reference to FIG. 11, the cover plate assembly 200 further includes a first insulating member 203, and the first insulating member 203 is disposed between the substrate 202 and the first current collector plate 3. For example, in an example of FIG. 11, the first insulating member 203 wraps around an upper side surface and an outer peripheral surface of the first current collector plate 3. Therefore, the first insulating member 203 insulates the substrate 202 from the first current collector plate 3, thereby avoiding a short circuit between the substrate 202 and the first current collector plate 3 when the cover plate assembly 200 is used for the battery cell 300, and ensuring that a current carrier from the first current collector plate 3 flows out after flowing through the terminal-pole 2, so that the cover plate assembly 200 can be normally used for a long time, and structural impedance can be reduced. For example, the first insulating member 203 may be disposed as an insulating adhesive, so that the first insulating member 203 has a bonding function, a use operation of the first insulating member 203 is simple, and use costs are relatively low.

According to some embodiments of this application, with reference to FIG. 9 and FIG. 10, a thickness of the first insulating member 203 is h₁, and h₁ meets 20 µm ≤ h₁ ≤ 200 µm. For example, when the thickness h₁ of the first insulating member 203 is greater than 200 µm, more materials are used for the first insulating member 203, and costs of the first insulating member 203 are relatively high. Consequently, costs of the cover plate 100 are relatively high. When the thickness h₁ of the first insulating member 203 is less than 20 µm, a connection function between the first insulating member 203 and the first current collector plate 3 is weakened, which reduces an insulation function of the first insulating member 203. Therefore, the thickness h₁ of the first insulating member 203 is set to meet 20 µm ≤ h₁ ≤ 200 µm, so that materials used for the first insulating member 203 are reduced, thereby reducing production costs of the first insulating member 203, and reducing production costs of the cover plate 100. In addition, a connection function between the first insulating member 203 and each of the substrate 202 and the first current collector plate 3 is enhanced, thereby facilitating long-term use of the first insulating member 203, and facilitating normal operation of the battery cell 300.

Optionally, at least one of the first current collector plate 3 and the second current collector plate 201 is a single-layer structural member. Configuration of the first current collector plate 3 and the second current collector plate 201 includes the following cases: first, only the first current collector plate 3 is a single-layer structural member; second, only the second current collector plate 201 is a single-layer structural member; and third, both the first current collector plate 3 and the second current collector plate 201 are single-layer structural members. Therefore, when the cover plate assembly 200 is used for the battery cell 300, current on the first tab 3011 of the battery cell 300 may flow out through the first current collector plate 3, current on the second tab 3012 of the battery cell 300 may flow out through the second current collector plate 201, and a current carrier can directly pass through the first current collector plate 3 or the second current collector plate 201 in a thickness direction of the first current collector plate 3 or the second current collector plate 201, thereby shortening a flow path of the current carrier, reducing structural impedance of the battery cell 300, facilitating normal use of the battery cell 300, and improving use performance of the battery cell 300. In addition, a single-layer structure has a simple structure and uses fewer materials, thereby reducing production costs of the first current collector plate 3 and the second current collector plate 201, and reducing production costs of the cover plate assembly 200. It will be noted that the "single-layer structural member" may refer to that the structural member that has no bent or overlapping portion in a thickness direction of the structural member. That is, the first current collector plate 3 is a single-layer structure with no bent or overlapping portion, and the second current collector plate 201 is a single-layer structure with no bent or overlapping portion.

Optionally, the second current collector plate 201 is formed by copper stamping. Copper has corrosion resistance and electrical conductivity. Therefore, this facilitates normal use of the second current collector plate 201, and improves structural strength of the second current collector plate 201, thereby facilitating long-term stable use of the second current collector plate 201. In addition, flatness of the second current collector plate 201 is improved through copper stamping, thereby improving use performance of the second current collector plate 201.

According to some optional embodiments of this application, the cover plate body 1 of the cover plate assembly 200 is connected to the second current collector plate 201 by welding. Therefore, a connection between the cover plate body 1 and the second current collector plate 201 is relatively secure, thereby preventing the second current collector plate 201 from detaching from the cover plate assembly 200, and further improving structural strength of the cover plate assembly 200.

Optionally, the substrate 202 is a steel stamped part. Therefore, production and machining efficiency of the substrate 202 is high, and machining accuracy is also high, thereby improving assembly accuracy of the substrate 202 and the cover plate body 1. Moreover, flatness of the substrate 202 is also improved. In addition, steel has corrosion resistance and electrical conductivity, thereby facilitating long-term use of the substrate 202, and facilitating an electrical connection between the second current collector plate 201 and the substrate 202 through the cover plate body 1.

With reference to FIG. 8 and FIG. 11, a battery cell 300 according to an embodiment of a third aspect of this application includes an electrode core 301 and a cover plate assembly 200. A first tab 3011 and a second tab 3012 are disposed at an end of the electrode core 301, and the first tab 3011 and the second tab 3012 have opposite polarities. The cover plate assembly 200 is the cover plate assembly 200 according to any one of the foregoing embodiments of the second aspect of this application. The cover plate assembly 200 is disposed at the end of the electrode core 301, the first current collector plate 3 of the cover plate assembly 200 is connected to the first tab 3011, and the second current collector plate 201 of the cover plate assembly 200 is connected to the second tab 3012.

For example, in examples of FIG. 8 and FIG. 11, both the first tab 3011 and the second tab 3012 are located at an upper end of the electrode core 301, the cover plate assembly 200 is located above the first tab 3011 and the second tab 3012, and the first tab 3011 and the second tab 3012 are spaced apart and opposite to each other. In this arrangement, the cover plate assembly 200 can be directly connected to the first tab 3011 and the second tab 3012, thereby improving assembly efficiency of the battery cell 300. In addition, a short circuit between the first tab 3011 and the second tab 3012 is avoided, thereby facilitating long-term normal use of the battery cell 300. Furthermore, the first tab 3011 and the second tab 3012 are located on the same side of the electrode core 301, so that an exhaust channel may be disposed on only one side of the battery cell 300, thereby improving space utilization of the battery cell 300.

For example, the first tab 3011 is a positive tab, and the second tab 3012 is a negative tab. A current-carrier flow path of a positive electrode of the battery cell 300 passes sequentially through the first tab 3011, the first current collector plate 3, and the terminal-pole 2, and then led out. A current-carrier flow path of a negative electrode of the battery cell 300 passes sequentially through the second tab 3012, the cover plate body 1, and the substrate 202, and then led out. Therefore, the current-carrier flow paths of both the positive electrode and the negative electrode of the battery cell 300 are relatively short, thereby further reducing structural impedance of the battery cell 300, and further facilitating use of the battery cell 300.

Optionally, the second current collector plate 201 is connected to the second tab 3012 by welding, and the first current collector plate 3 is connected to the first tab 3011 by welding. For example, the second current collector plate 201 is laser-welded to the second tab 3012, and the first current collector plate 3 is laser-welded to the first tab 3011. Therefore, a connection between the second current collector plate 201 and the second tab 3012 is relatively secure, and a connection between the first current collector plate 3 and the first tab 3011 is relatively secure, thereby preventing the second current collector plate 201 from detaching from the second tab 3012, preventing the first current collector plate 3 from detaching from the first tab 3011, further improving connection stability of the first current collector plate 3 and the second current collector plate 201, and improving stability of the cover plate assembly 200. Moreover, compared with conventional torque welding, a laser welding process is used for connection, a current carrier flowing through the first current collector plate 3 and the second current collector plate 201 is not limited, and welding costs are relatively low, thereby further reducing production costs of the battery cell 300, and improving a welding yield and detectability of the battery cell 300. In addition, the welding method is simple, thereby improving feasibility of the welding process.

According to some embodiments of this application, with reference to FIG. 11, the battery cell 300 further includes a second insulating member 302, and the second insulating member 302 is disposed between the first tab 3011 and the second tab 3012. For example, in an example of FIG. 11, two sides of a lower side surface of the second insulating member 302 in a width direction are respectively connected to the first tab 3011 and the second tab 3012, and an upper side surface of the second insulating member 302 is connected to a lower side surface of the first current collector plate 3. Therefore, the second insulating member 302 is disposed to insulate the first tab 3011 from the second tab 3012, thereby avoiding a short circuit between the second tab 3012 and the first tab 3011, to facilitate normal use of the battery cell 300. For example, the second insulating member 302 may be disposed as an insulating adhesive, so that the second insulating member 302 has a bonding function, a use operation of the second insulating member 302 is simple, and use costs are relatively low.

According to some embodiments of this application, with reference to FIG. 10, a thickness of the second insulating member 302 is h₂, and h₂ meets 20 µm ≤ h₂ ≤ 200 µm. For example, when the thickness h₂ of the second insulating member 302 is greater than 200 µm, more materials are used for the second insulating member 302, and costs of the second insulating member 302 are relatively high. Consequently, production costs of the battery cell 300 are relatively high. When the thickness h₂ of the second insulating member 302 is less than 20 µm, a connection function between the second insulating member 302 and each of the first tab 3011 and the second tab 3012 is relatively weak, thereby reducing use stability of the second insulating member 302. Therefore, the thickness h₂ of the second insulating member 302 is set to meet 20 µm ≤ h₂ ≤ 200 µm, so that materials used for the second insulating member 302 are reduced, thereby reducing production costs of the second insulating member 302, and further reducing production costs of the cover plate 100. In addition, connection stability between the second insulating member 302 and each of the first tab 3011 and the second tab 3012 is improved, thereby facilitating long-term stable use of the second insulating member 302.

According to some embodiments of this application, with reference to FIG. 9, the terminal-pole 2 of the cover plate assembly 200 is opposite to a center of the end of the electrode core 301. For example, in an example of FIG. 9, a lower side surface of the terminal-pole 2 is vertically opposite to a central position of the upper end of the electrode core 301. That is, the terminal-pole 2 is located at the central position of the upper end of the electrode core 301. This arrangement facilitates a connection between the terminal-pole 2 and the first current collector plate 3, and a welding trajectory of the connected first current collector plate 3 is brought as close as possible to a center of the electrode core 301, to reduce structural impedance and improve current-carrying capability, thereby improving use performance of the battery cell 300.

Optionally, an annular connection position between the substrate 202 and the cover plate body 1 and an annular connection position between the substrate 202 and the housing 303 are approximately of a similar "square-in-square" shape design. That is, the connection position between the substrate 202 and the cover plate body 1 is annular, and the connection position between the substrate 202 and the housing 303 is annular, and is located on an outer periphery of the connection position between the substrate 202 and the cover plate body 1, thereby avoiding overlapping of welding points at welding positions between the substrate 202 and both the cover plate body 1 and the housing 303, which may result in poor welding, and avoiding an inflection point design, which may result in poor welding at an inflection point.

According to some optional embodiments of this application, with reference to FIG. 5 and FIG. 11, a width of the recess 33 is w₁, a diameter of the electrode core 301 is d₅, and w₁ meets 4 mm ≤ w₁ ≤ 0.4d₅. That is, a maximum value of the width of the recess 33 is related to the diameter of the electrode core 301, and is 0.4 times the diameter of the electrode core 301. For example, when the width w₁ of the recess 33 is greater than 0.4d₅, the width of the recess 33 is relatively large, so that an area of another portion of the first current collector plate 3 is relatively small, and a contact area between the first current collector plate 3 and the first insulating member 203 is relatively small, which reduces connection stability between the first current collector plate 3 and the first insulating member 203. When the width w₁ of the recess 33 is less than 4 mm, the width of the recess 33 is relatively small, so that an area of the connection protrusion 32 is relatively small, and a connection area between the first current collector plate 3 and the first tab 3011 is reduced, which reduces connection stability between the first current collector plate 3 and the first tab 3011, and improves structural impedance of the battery cell 300. Therefore, the width w₁ of the recess 33 is set to meet 4 mm ≤ w₁ ≤ 0.4d₅, so that a connection area between the first current collector plate 3 and each of the first insulating member 203 and the first tab 3011 is increased, thereby improving connection stability between the first current collector plate 3 and each of the first insulating member 203 and the first tab 3011, reducing the structural impedance of the battery cell 300, and facilitating use of the battery cell 300.

Optionally, the electrode core 301 is formed by winding, and the first tab 3011 and the second tab 3012 are smoothed tabs or cut-and-stacked tabs. A tab is divided into two parts, one part is the first tab 3011, the first tab 3011 is connected to the first current collector plate 3, the other part is the second tab 3012, the second tab 3012 is connected to the second current collector plate 201, and the first tab 3011 and the second tab 3012 are spaced apart. This facilitates production of the electrode core 301. In addition, an overlapping short circuit between the first tab 3011 and the second tab 3012 can be prevented, thereby facilitating long-term normal use of the battery cell 300.

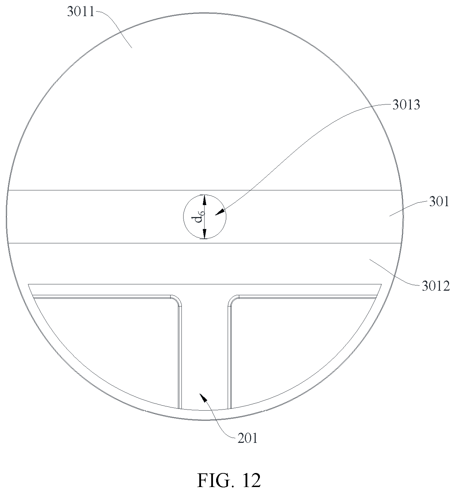

Optionally, with reference to FIG. 12, a central region of the electrode core 301 is provided with a central hole 3013, and the central hole 3013 is located between the first tab 3011 and the second tab 3012. Opposite side surfaces of the first tab 3011 and the second tab 3012 are each tangent to an edge of the central hole 3013, a diameter of the central hole 3013 is d₆, and d₆ meets 2 mm ≤ d₆ ≤ 10 mm. When the diameter d₆ of the central hole 3013 is greater than 10 mm, areas of the first tab 3011 and the second tab 3012 are relatively small, which reduces contact areas between the first tab 3011 and the second tab 3012 and the corresponding first current collector plate 3 and second current collector plate 201, and is not conducive to normal use of the battery cell 300. When the diameter d₆ of the central hole 3013 is less than 2 mm, a distance between the first tab 3011 and the second tab 3012 is relatively small, and an overlapping short circuit easily occurs, which is not conducive to normal use of the battery cell 300. Therefore, the diameter d₆ of the central hole 3013 is set to meet 2 mm ≤ d₆ ≤ 10 mm, so that not only the contact areas between the first tab 3011 and the second tab 3012 and the corresponding first current collector plate 3 and second current collector plate 201 can be increased, to facilitate normal use of the battery cell 300, but also an overlapping short circuit between the first tab 3011 and the second tab 3012 can be prevented, thereby prolonging service life of the battery cell 300.

Optionally, with reference to FIG. 8 and FIG. 11, the battery cell 300 further includes the housing 303 and a partition member 304, the housing 303 wraps around the electrode core 301, the electrode core 301 and the partition member 304 are both disposed in the housing 303, the partition member 304 is located between the electrode core 301 and an inner wall of the housing 303, and the electrode core 301 is isolated from the inner wall of the housing 303 by using the partition member 304. For example, in examples of FIG. 8 and FIG. 11, the partition member 304 is disposed at an end of the housing 303 that is away from the cover plate 100 in the up-down direction, and the partition member 304 is located between a lower end of the electrode core 301 and a bottom wall of the housing 303. In this arrangement, the partition member 304 separates the electrode core 301 from the housing 303, so that a current carrier on the electrode core 301 cannot pass through the housing 303, thereby reducing structural impedance of the battery cell 300. In addition, an end of the electrode core 301 that is adjacent to the partition member 304 is not in contact with the bottom wall of the housing 303, and the partition member 304 has a protection function for the electrode core 301, so that the electrode core 301 can be prevented from being damaged due to direct contact between the electrode core 301 and the housing 303, thereby prolonging service life of the electrode core 301, and prolonging service life of the battery cell 300. Furthermore, an installation operation of the partition member 304 is simple, and the partition member 304 only needs to be placed in the housing 303, thereby improving assembly efficiency of the battery cell 300.

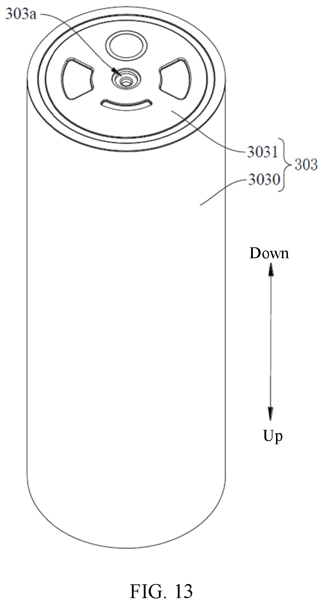

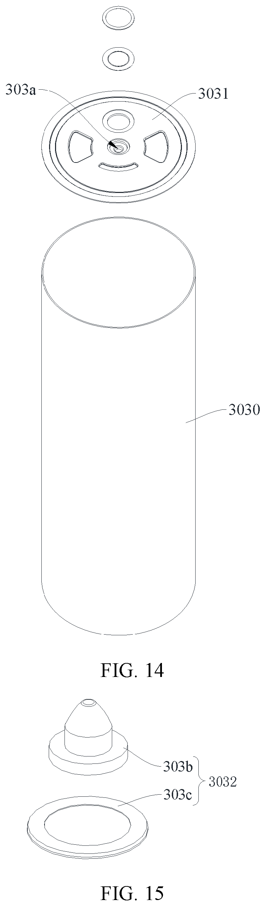

Optionally, with reference to FIG. 13 to FIG. 15, the housing 303 includes a housing body 3030 and a bottom cover plate 3031. The bottom cover plate 3031 is connected to a lower end of the housing body 3030 to jointly define space for placing the electrode core 301, and the bottom cover plate 3031 is connected to the housing body 3030 through welding. The bottom cover plate 3031 is provided with a liquid injection hole 303a, and a sealing structure 3032 that fits with the liquid injection hole 303a is disposed at the liquid injection hole 303a. The sealing structure 3032 includes an elastic sealing pad 303b and a sealing cover 303c. A side of the elastic sealing pad 303b that is away from the electrode core 301 is connected to the sealing cover 303c, and the sealing cover 303c is welded to the elastic sealing pad 303b and an inner wall of the liquid injection hole 303a. Therefore, connection strength between the bottom cover plate 3031 and a circumferential side wall of the housing 303 is enhanced, thereby improving structural strength of the housing 303, and facilitating long-term stable use of the housing 303. In addition, machining accuracy of the housing body 3030 and the bottom cover plate 3031 is improved, thereby improving machining accuracy of the housing 303. Furthermore, after an electrolyte is injected into the battery cell 300 through the liquid injection hole 303a, the elastic sealing pad 303b is used to seal the liquid injection hole 303a, thereby preventing the electrolyte from flowing out, and avoiding damage to the battery cell 300. The sealing cover 303c further improves sealing performance between the elastic sealing pad 303b and the liquid injection hole 303a, thereby further preventing the electrolyte from flowing out, and further avoiding damage to the battery cell 300.

Optionally, both the first insulating member 203 and the second insulating member 302 may be made of polyethylene terephthalate. Polyethylene terephthalate has an excellent electrical insulation property, and insulation performance remains relatively good even in a high-temperature and high-frequency condition. Therefore, when the battery cell 300 generates heat after being used for a period of time, the first insulating member 203 and the second insulating member 302 still have a relatively good insulation function, thereby avoiding a short circuit between internal components of the battery cell 300, to facilitate normal use of the battery cell 300.

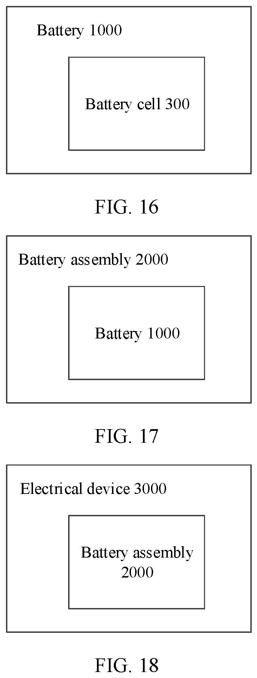

A battery 1000 according to an embodiment of a fourth aspect of this application includes the battery cell 300 according to the embodiment of the third aspect of this application, as shown in FIG. 16.

The battery 1000 according to this embodiment of this application uses the foregoing battery cell 300, so that assembly efficiency of the battery 1000 is improved, and use performance of the battery 1000 is improved.

According to some embodiments of this application, with reference to FIG. 1, a side edge of the cover plate body 1 of the cover plate 100 of the cover plate assembly 200 of the battery cell 300 is an arc adapted to an outer peripheral contour of the battery cell 300. For example, in the example of FIG. 1, a side edge of the cover plate body 1 that is away from the first current collector plate 3 in a plane perpendicular to the up-down direction of the first current collector plate 3 is formed as an arc-shaped edge, the battery cell 300 is provided in a cylindrical shape, and the arc-shaped edge matches an edge shape of the battery cell 300. Therefore, the cover plate body 1 has a simple structure, and is easy to produce, and aesthetics of the cover plate body 1 is also improved. In addition, when the cover plate body 1 is used for the battery cell 300, the arc-shaped edge of the cover plate body 1 fits with an outer peripheral surface of the battery cell 300, and this facilitates assembly of the cover plate 100 with another component of the battery cell 300, thereby improving assembly efficiency of the battery cell 300. Furthermore, a connection area between the cover plate body 1 and another component of the battery cell 300, such as the second current collector plate 201, is increased, thereby improving use stability of the cover plate body 1.

A battery assembly 2000 according to an embodiment of a fifth aspect of this application includes the battery 1000 according to the embodiment of the fourth aspect of this application, as shown in FIG. 17.

The battery assembly 2000 according to this embodiment of this application uses the foregoing battery 1000, so that assembly efficiency of the battery assembly 2000 is improved, and use performance of the battery assembly 2000 is improved.

An electrical device 3000 according to an embodiment of a sixth aspect of this application includes the battery assembly 2000 according to the embodiment of the fifth aspect of this application, as shown in FIG. 18.

The electrical device 3000 according to this embodiment of this application uses the foregoing battery assembly 2000, so that use performance of the electrical device 3000 is improved, and user experience is improved. The electrical device 3000 may be a vehicle, an electric two-wheeled vehicle, an electric multi-wheeled vehicle, an energy storage cabinet, a drone, a ship, or the like.

Other components and operations of the battery cell 300, the battery 1000, the battery assembly 2000, and the electrical device 3000 according to embodiments of this application are known to a person of ordinary skill in the art, and are not described in detail herein.

In the description of this application, it will be understood that the orientations or positional relationships indicated by terms "center", "width", "thickness", "upper", "lower", "top", "bottom", "inside", "outside", "axial", and "circumferential" are based on the orientations or positional relationships shown in the drawings and are only for convenience of description of this application and simplification of description rather than indicating or implying that the apparatus or element referred to needs to have a particular orientation or be constructed and operated in a particular orientation, and therefore, will not be understood as a limitation on this application.

In the description of this specification, descriptions provided with reference to terms such as "an embodiment", "some embodiments", "an example embodiment", "an example", "a specific example", or "some examples" mean that specific features, structures, materials, or characteristics described with reference to the embodiment or example are included in at least one embodiment or example of this application. In this specification, illustrative expressions of the foregoing terms do not necessarily refer to the same embodiment or example.

Although embodiments of this application have been shown and described, a person of ordinary skill in the art may understand that many changes, modifications, replacements, and variations can be made to these embodiments without departing from the principles and purposes of this application, and the scope of this application is defined by the claims and their equivalents.

## Claims

1. A cover plate (100), comprising:
a cover plate body (1);
a terminal-pole (2), wherein the terminal-pole (2) is disposed on the cover plate body (1), and the terminal-pole (2) is connected to and insulated from the cover plate body (1); and
a first current collector plate (3), wherein the first current collector plate (3) is connected to the terminal-pole (2), the first current collector plate (3) comprises a body portion (35), the body portion (35) is adapted to be connected to a tab, the body portion (35) is exposed from the cover plate body (1) in a thickness direction of the first current collector plate (3), a shortest distance between the body portion (35) and a center of the terminal-pole (2) is d₀, and d₀ meets 2 mm ≤ d₀ ≤ 8 mm.

2. The cover plate (100) according to claim 1, wherein d₀ further meets 4 mm ≤ d₀ ≤ 8 mm.

3. The cover plate (100) according to claim 1 or 2, wherein the terminal-pole (2) extends through the cover plate body (1), a first insulating partition member (4) and a sealing member (7) are disposed between an outer peripheral surface of the terminal-pole (2) and the cover plate body (1), the sealing member (7) is sleeved on the terminal-pole (2), and the first insulating partition member (4) is disposed on outer peripheral sides of the sealing member (7) and the terminal-pole (2).

4. The cover plate (100) according to claim 3, further comprising:
a connection member (6), wherein the connection member (6) is connected to an end of the terminal-pole (2) that is away from the first current collector plate (3) in the thickness direction of the first current collector plate (3); and
a second insulating partition member (5), wherein the second insulating partition member (5) is disposed between the connection member (6) and the cover plate body (1).

5. The cover plate (100) according to claim 4, wherein a second insulating partition member recess (51) is formed on the second insulating partition member (5), the connection member (6) is fitted in the second insulating partition member recess (51), and the connection member (6) is insulated from the cover plate body (1) by using the second insulating partition member (5).

6. The cover plate (100) according to claim 4 or 5, wherein the terminal-pole (2) comprises a first terminal-pole segment (21) and a second terminal-pole segment (22) that are connected to each other, the first terminal-pole segment (21) passes through the cover plate body (1) and the second insulating partition member (5) to be connected to the connection member (6), the second terminal-pole segment (22) is located on a side of the cover plate body (1) that faces the first current collector plate (3), and the second terminal-pole segment (22) is connected to the first current collector plate (3).

7. The cover plate (100) according to claim 6, wherein a cover plate through-hole (11) is formed on the cover plate body (1), the first terminal-pole segment (21) passes through the cover plate through-hole (11), at least a part of the sealing member (7) is disposed between an outer peripheral surface of the first terminal-pole segment (21) and an inner peripheral wall of the cover plate through-hole (11), and the first insulating partition member (4) is disposed on outer peripheral sides of the sealing member (7) and the second terminal-pole segment (22).

8. The cover plate (100) according to claim 7, wherein the sealing member (7) comprises:
a first sealing segment (71), wherein the first sealing segment (71) is disposed between an outer peripheral surface of the terminal-pole (2) and the inner peripheral wall of the cover plate through-hole (11); and
a second sealing segment (72), wherein the second sealing segment (72) is connected to an end of the first sealing segment (71) that is adjacent to the first current collector plate (3), and the second sealing segment (72) is located between the first insulating partition member (4) and the first terminal-pole segment (21).

9. The cover plate (100) according to any one of claims 6 to 8, wherein an anti-rotation groove (41) is formed on a side surface of the first insulating partition member (4) that is adjacent to the first current collector plate (3), and the second terminal-pole segment (22) is fitted in the anti-rotation groove (41); and
the first current collector plate (3) is provided with an extension portion (31), at least a part of an outer peripheral edge of the extension portion (31) is fitted in the anti-rotation groove (41), and the extension portion (31) is connected to a side of the second terminal-pole segment (22) that is away from the cover plate body (1).

10. The cover plate (100) according to claim 9, wherein the at least a part of the outer peripheral edge of the extension portion (31) matches a shape of an inner peripheral wall of the anti-rotation groove (41).

11. The cover plate (100) according to claim 9 or 10, wherein an anti-rotation protrusion (42) is disposed on the side surface of the first insulating partition member (4) that is adjacent to the first current collector plate (3), the anti-rotation protrusion (42) and the side surface of the first insulating partition member (4) that is adjacent to the first current collector plate (3) jointly define the anti-rotation groove (41), and a side of the anti-rotation groove (41) that is adjacent to a center of the first current collector plate (3) is open.

12. The cover plate (100) according to any one of claims 3 to 11, wherein a thickness of the first insulating partition member (4) is d₁, and d₁ meets 0.5 mm ≤ d₁ ≤ 2.0 mm.

13. The cover plate (100) according to any one of claims 3 to 12, wherein the first insulating partition member (4) is an injection molded part.

14. The cover plate (100) according to any one of claims 6 to 11, wherein a cover plate protrusion (12) is disposed on a side surface of the cover plate body (1) that is adjacent to the first insulating partition member (4) in a thickness direction of the cover plate body (1); and
a first insulating partition member recess (43) is formed on a side surface of the first insulating partition member (4) that is adjacent to the cover plate body (1) in the thickness direction of the cover plate body (1), a first insulating partition member through-hole (44) is formed on a bottom wall of the first insulating partition member recess (43), the first terminal-pole segment (21) passes through the first insulating partition member through-hole (44), and the cover plate protrusion (12) is fitted in the first insulating partition member recess (43).

15. The cover plate (100) according to claim 14, wherein the cover plate protrusion (12) is formed by a part of a side surface of the cover plate body (1) that is away from the first current collector plate (3) in the thickness direction of the cover plate body (1), protruding toward a side surface of the first current collector plate (3).

16. The cover plate (100) according to claim 14 or 15, wherein the cover plate protrusion (12) forms a cover plate recess (13) on the side surface of the cover plate body (1) that is away from the first current collector plate (3) in the thickness direction of the cover plate body (1), and at least a part of the second insulating partition member (5) is fitted in the cover plate recess (13).

17. The cover plate (100) according to any one of claims 4 to 11 and 14 to 16, wherein the connection member (6) is polygonal or oblong.

18. The cover plate (100) according to any one of claims 4 to 11 and 14 to 17, wherein a width of the connection member (6) is w, a diameter of the terminal-pole (2) is d₂, and w and d₂ meet 3.5 mm ≤ w - d₂ ≤ 6 mm.

19. The cover plate (100) according to any one of claims 4 to 11 and 14 to 18, wherein the connection member (6) is an aluminum stamped part.

20. The cover plate (100) according to any one of claims 1 to 19, wherein the cover plate body (1) is a steel stamped part.

21. The cover plate (100) according to any one of claims 1 to 20, wherein a connection protrusion (32) protruding away from the cover plate body (1) in the thickness direction of the first current collector plate (3) is disposed on the first current collector plate (3).

22. The cover plate (100) according to claim 21, wherein the connection protrusion (32) comprises a first protrusion portion (321) and a second protrusion portion (322), one end of the first protrusion portion (321) is connected to one end of the second protrusion portion (322), the other end of the first protrusion portion (321) and the other end of the second protrusion portion (322) extend in a direction in which the two ends are away from each other, an included angle between the first protrusion portion and the second protrusion portion is β, and β meets 20° ≤ β ≤ 80°.

23. The cover plate (100) according to claim 21 or 22, wherein the connection protrusion (32) is formed by a part of a side surface of the first current collector plate (3) that is adjacent to the terminal-pole (2) in the thickness direction of the first current collector plate (3), protruding toward a side surface away from the terminal-pole (2); and the connection protrusion (32) forms a recess (33) on the side surface of the first current collector plate (3) that is adjacent to the terminal-pole (2) in the thickness direction of the first current collector plate (3), so that the connection protrusion (32) is formed on the side surface away from the terminal-pole (2).

24. A cover plate assembly (200), comprising:
a cover plate (100), wherein the cover plate (100) is the cover plate (100) according to any one of claims 1 to 23; and
a second current collector plate (201), wherein the second current collector plate (201) is connected to the cover plate body (1) of the cover plate (100), the second current collector plate (201) is insulated from the terminal-pole (2) and the first current collector plate (3) of the cover plate (100), and the second current collector plate (201) and the first current collector plate (3) are respectively connected to tabs with opposite polarities.

25. The cover plate assembly (200) according to claim 24, further comprising:
a substrate (202), wherein the substrate (202) is connected to a side of the cover plate (100) that is away from the second current collector plate (201) in a thickness direction of the cover plate (100), an opening (2021) is formed on the substrate (202), and the terminal-pole (2) is exposed from the opening (2021).

26. The cover plate assembly (200) according to claim 25, wherein an outer peripheral edge of the cover plate (100) has a step portion (14), an edge of the opening (2021) has a fitting portion (2022) extending toward a center of the opening (2021), and the fitting portion (2022) is fitted on the step portion (14).

27. The cover plate assembly (200) according to claim 25 or 26, wherein on a side on which the second current collector plate (201) is located, a shortest distance between the edge of the opening (2021) and an outer peripheral edge of the substrate (202) is d₄, and d₄ meets 1.5 mm ≤ d₄ ≤ 4 mm.

28. The cover plate assembly (200) according to any one of claims 25 to 27, further comprising:
a first insulating member (203), wherein the first insulating member (203) is disposed between the substrate (202) and the first current collector plate (3).

29. The cover plate assembly (200) according to claim 28, wherein a thickness of the first insulating member (203) is h₁, and h₁ meets 20 µm ≤ h₁ ≤ 200 µm.

30. A battery cell (300), comprising:
an electrode core (301), wherein a first tab (3011) and a second tab (3012) are disposed at an end of the electrode core (301), and the first tab (3011) and the second tab (3012) have opposite polarities; and
a cover plate assembly (200), wherein the cover plate assembly (200) is the cover plate assembly (200) according to any one of claims 24 to 29, the cover plate assembly (200) is disposed at the end of the electrode core (301), the first current collector plate (3) of the cover plate assembly (200) is connected to the first tab (3011), and the second current collector plate (201) of the cover plate assembly (200) is connected to the second tab (3012).

31. The battery cell (300) according to claim 30, further comprising:
a second insulating member (302), wherein the second insulating member (302) is disposed between the first tab (3011) and the second tab (3012).

32. The battery cell (300) according to claim 31, wherein a thickness of the second insulating member (302) is h₂, and h₂ meets 20 µm ≤ h₂ ≤ 200 µm.

33. The battery cell (300) according to any one of claims 30 to 32, wherein the terminal-pole (2) of the cover plate assembly (200) is opposite to a center of the end of the electrode core (301).

34. A battery (1000), comprising the battery cell (300) according to any one of claims 30 to 33.

35. The battery (1000) according to claim 34, wherein a side edge of the cover plate body (1) of the cover plate (100) of the cover plate assembly (200) of the battery cell (300) is formed as an arc adapted to an outer peripheral contour of the battery cell (300).

36. A battery assembly (2000), comprising the battery (1000) according to claim 34 or 35.

37. An electrical device (3000), comprising the battery assembly (2000) according to claim 36.
